# EUROPÄISCHE PATENTSCHRIFT

(11) **EP 3 470 352 B1**
(45) Veröffentlichungstag und Bekanntmachung des Hinweises auf die Patenterteilung: **09.08.2023**
(21) Anmeldenummer: 18198683.7
(22) Anmeldetag: 04.10.2018
(51) Int. Cl.: B65G 53/56, F16K 11/083

(54) **WEICHE FÜR DIE FÖRDERUNG VON FÖRDERGUT SOWIE VERFAHREN ZUM REINIGEN EINER DERARTIGEN WEICHE**
POINTS FOR TRANSPORTING TRANSPORTED GOODS AND METHOD FOR CLEANING POINTS
AIGUILLAGE DESTINÉ AU TRANSPORT DE LA MARCHANDISE À TRANSPORTER AINSI QUE PROCÉDÉ DE NETTOYAGE D'UN TEL AIGUILLAGE

(30) Priorität: 10.10.2017 DE 102017218031
(43) Veröffentlichungstag der Anmeldung: 17.04.2019
(73) Patentinhaber: Coperion GmbH, 70469 Stuttgart (DE)
(72) Erfinder: Zinser, Bruno, 88289 Waldburg (DE); Schädler, Manfred, 88213 Ravensburg (DE); Stephan, Martin, 88368 Bergartreute (DE)
(74) Vertreter: Rau, Schneck & Hübner Patentanwälte Rechtsanwälte PartGmbB

(56) Entgegenhaltungen:
- EP-A1- 0 994 050
- DE-A1-102005 061 432
- DE-B3- 10 219 989
- DE-C- 355 796
- FR-A- 1 592 242
- US-A- 1 725 337

## Beschreibung

Die Erfindung betrifft eine Weiche für die Förderung von Fördergut.

Die DE 2 104 098 A offenbart ein Ausgleichsventil.

Die DE 355 796 C, die FR 1 592 242 A, die DE 102 19 989 B3 und die US 1,725,337 A offenbaren jeweils eine Weiche für die Förderung von Fördergut.

Die EP 0 994 050 A1 offenbart eine Weiche für die Förderung von Fördergut nach dem Oberbegriff des Anspruchs 1.

Aus der DE 10 2005 061 432 A1 ist eine Rohrweiche mit einem Drehküken bekannt, das in einem Gehäuse zwischen einer Förderstellung und einer Reinigungsstellung verlagerbar ist. Die Drehachse des Kükens ist in der Förderebene der Rohrweiche angeordnet. Die Rohrweiche kann mit einer Spülflüssigkeit gereinigt werden, ohne dass das Küken aus dem Gehäuse ausgebaut werden muss. Die Rohrweiche ermöglicht eine sogenannte Cleaning-in-Place (CIP)-Reinigung. Aufgrund der Anordnung des Kükens zwischen Durchgang und Abgang ergibt sich ein vergleichsweise kleiner Konuswinkel des Kükens, der zu einem vergleichsweisen langbauenden Küken führt. Zwischen dem langbauendem Küken und dem Gehäuse der Rohrweiche resultiert ein langer Spalt, dessen Abdichtung in der Förderposition problematisch sein kann.

Eine Förderrohrweiche mit einem Gehäuse und einem darin drehbar gelagerten Drehküken ist aus EP 2 332 869 B1 bekannt. Die Förderrohrweiche ermöglicht die CIP-Reinigung. Um die CIP-Reinigung zu ermöglichen, ist eine aufwendige Gestaltung der Drehkükens und des Gehäuses der Förderrohrweiche erforderlich, um einen in allen Raumrichtungen umlaufenden Spülspalt zwischen Drehküken und Gehäuse sicherzustellen. Die CIP-Reinigung mit der Förderrohrweiche ist fehleranfällig.

Gestaltungsrichtlinien für die Schüttgutförderung unter Hygienebedingungen sind in den EHEDG-Richtlinien Dokument 22 (General hygienic design criteria for the safe processing of dry particulate material, second edition, March 2014) und Dokument 41 (Hygienic engineering of diverter valves in process line for dry particulate material, August 2011) vorgegeben.

Es ist eine Aufgabe der vorliegenden Erfindung, eine Weiche für die Förderung von Fördergut bereitzustellen, die eine stabile Förderung von Fördergut sicherstellt und eine zuverlässige CIP-Reinigung gewährleistet.

Diese Aufgabe ist erfindungsgemäß gelöst durch eine Weiche mit den im Anspruch 1 angegebenen Merkmalen.

Erfindungsgemäß wurde erkannt, dass bei einer Weiche mit einem zumindest abschnittsweise konisch ausgeführten Drehteil ein definierter Spülspalt zwischen dem Drehteil und Gehäuse erzeugt werden kann, indem das Drehteilentlang seiner Drehachse in einem Gehäuse axial verlagert wird. Beispielsweise bewirkt eine Axialverlagerung des Drehteils entlang der Drehachse um etwa 10 mm einen ausreichend großen Spülspalt. Der Spülspalt ist definiert als senkrechter Abstand der Innenseite des Gehäuses zu einer Außenseite des Drehteils. Die Außenseite des Drehteils kann durch die Außenkontur des Drehteils oder ein daran vorstehendes Dichtungselement festgelegt sein. Durch die axiale Verlagerung des Drehteils kann die Weiche zwischen einer Förderstellung und einer Reinigungsstellung verlagert werden.

Der Spülspalt ist insbesondere so festgelegt, dass gewährleistet ist, dass eine zugeführte Spülflüssigkeit sämtliche Bereiche des Innenraums des Gehäuses und des Drehteils benetzt und umspült, also reinigt. Zusätzlich weist die Weiche eine Ablauföffnung im Gehäuse auf, so dass die Reinigungsflüssigkeit selbsttätig, insbesondere infolge der Schwerkraft, aus dem Gehäuse ablaufen kann. Die Weiche erfüllt die Voraussetzungen für eine CIP-Reinigung. Dadurch, dass der Spülspalt aktiv erzeugt wird, ist eine zuverlässige Reinigung gewährleistet. Der Spülspalt kann in einem Bereich von 0,5 mm bis 4 mm festgelegt werden, insbesondere in einem Bereich zwischen 1,0 mm und 3,0 mm und insbesondere zwischen 1,5 mm und 2,0 mm. Der Spülspalt ist ausreichend groß, um eine störungsfreie Spülung und Reinigung der Weiche sicherzustellen. Störungen infolge eines unzureichenden und/oder unkontrolliert blockierten Spülspaltes sind ausgeschlossen. Das Gehäuse weist mindestens drei Durchgansöffnungen zum Zuführen oder Abführen des Förderguts auf, wobei die Durchgangsöffnungen eine Förderebene festlegen. Die Drehachse des Drehteils ist senkrecht zu der Förderebene orientiert. Dadurch ist es möglich, die Drehung des Drehteils einerseits und die axiale Verlagerung des Drehteils andererseits auf zwei separate Antriebe aufzuteilen. Die beiden Antriebe können in axialer Richtung der Drehachse gegenüberliegend an dem Drehteil angeordnet werden. Dadurch ist eine Funktionstrennung der Antriebe möglich. Es ist zudem möglich, das Drehteil beidseitig bezüglich der Drehachse zu lagern. Dadurch ist die Führung der Drehbewegung des Drehteils verbessert, insbesondere präziser. Dadurch ist es insbesondere möglich, einen Radialspalt zwischen dem Drehteil und dem Gehäuse in der Förderstellung von 0,01 mm bis 0,5 mm festzulegen. Im Vergleich zu einer Rohrweiche gemäß der DE 10 2005 061 432 A1, bei der die Antriebsachse des Kükens in der Förderebene liegt, ist ein größerer Konuswinkel für die Ausführung des Drehteils möglich. Daraus ergeben sich Vorteile bei der Abdichtung des Drehteils im Gehäuse.

Gemäß einer besonderen Ausprägung ist die zumindest abschnittsweise konische Ausführung des Drehteils entlang der Drehachse auf den Abschnitt, in dem der Durchgangskanal verläuft, begrenzt. Das Drehteil ist in dieser Ausgestaltung im Wesentlichen auf den Durchgangskanal und den angrenzenden Dichtungsbereich beschränkt. Insbesondere kann das Drehteil auch abschnittsweise bezüglich einer Drehung um die Drehachse konisch ausgeführt sein. Das Drehteil ist insbesondere segementartig ausgeführt mit einem Öffnungswinkel bezüglich der Drehachse, der kleiner ist als 360°, insbesondere kleiner als 270°, insbesondere kleiner als 225°, insbesondere kleiner oder gleich 200°.

Eine der Durchgangsöffnungen ist eine Zuführöffnung, um Fördergut der Weiche zuzuführen. Mindestens zwei der Durchgangsöffnungen sind Abführöffnungen, um das Fördergut, insbesondere wahlweise, entlang der einen oder der anderen Abführöffnung abzuführen. Insbesondere ist genau eine Zuführöffnung vorgesehen, die wahlweise mit einer der genau zwei Abführöffnungen mittels des Durchgangskanals im Drehteil verbindbar ist. In dieser Ausführung ist die Weiche eine Verteilweiche.

Alternativ kann die erfindungsgemäße Weiche auch als Sammelweiche eingesetzt werden. Bei der Sammelweiche dienen mindestens zwei der Durchgangsöffnungen als Zuführöffnungen, um das Fördergut der Weiche zuzuführen. Insbesondere ist genau eine Abführöffnung vorgesehen, die wahlweise mit einer der genau zwei Zuführöffnungen mittels des Durchgangskanals im Drehteil verbindbar ist.

Für die Festlegung des Förderwegs durch die Weiche ist das Drehteil um die Drehachse drehantreibbar in dem Gehäuse angeordnet. Das Drehteil weist einen Durchgangskanal auf, der in Abhängigkeit seiner Drehposition um die Drehachse die mindestens eine Zuführöffnung mit mindestens einer der Abführöffnungen zur Fördergutförderung verbindet. Der Durchgangskanal erstreckt sich entlang einer Durchgangskanal-Längsachse, die insbesondere geradlinig und insbesondere senkrecht zur Drehachse orientiert ist. Der Durchgangskanal weist zwei Durchgangskanal-Öffnungen auf, die an der konischen Außenkontur des Drehteils angeordnet sind. Die Durchgangskanal-Öffnungen weisen jeweils insbesondere eine geschlossene Außenkontur auf. Die Gehäusegeometrie weist insbesondere keine spitzen Übergänge auf. Die Herstellung des Gehäuses im Metallgussverfahren ist vereinfacht, insbesondere gegenüber der DE 10 2005 061 432 A1. Das Risiko der unerwünschten Porenbildung ist reduziert. Das Drehteil und ein Gehäusedeckel können vorteilhaft aus einem Halbzeug hergestellt werden. Das Risiko unerwünschter Poren ist dadurch reduziert. Insbesondere kann das Drehteil aus einem Rundmaterial gedreht werden, wobei insbesondere Verbindungswellen zu einem Axialantrieb und einem Drehantrieb stirnseitig an dem Rundmaterial fest verbunden sind. Insbesondere sind die Verbindungswellen mit dem Drehteil verschweißt. Insbesondere sind die freien Enden der Verbindungswellen in stirnseitige Vertiefungen an dem Drehteil eingesteckt und anschließend verschweißt, also eingeschweißt. Der Gehäusedeckel kann beispielsweise aus einem Dickblech hergestellt sein. Das Drehteil und der Gehäusedeckel eignen sich insbesondere für Hygieneanwendungen der Weiche, da Risse und Hohlräume, in welchen sich Produkt ablagern und zu Verunreinigungen führen könnte, vermieden sind. Die Hygienebedingungen für die Weiche sind verbessert. Vorteilhaft ist es, wenn die Ablauföffnung unabhängig von der jeweiligen Einbauposition der Weiche entlang eines Förderstrangs in einer Förderanlage jeweils an einem tiefsten Punkt des Gehäuses angeordnet ist. Dadurch ist das selbsttätige Ablaufen der Spülflüssigkeit zuverlässig gewährleistet. Es ist auch denkbar, mehrere Abführöffnungen an dem Gehäuse vorzusehen, um insbesondere unabhängig von der Einbauposition der Weiche entlang eines Förderstrangs mindestens eine Ablauföffnung bereitzustellen, über die ein selbsttätiges Ablaufen der Spülflüssigkeit gewährleistet ist. Die Ablauföffnung weist eine Querschnittsfläche auf, die zwischen dem 0,01- und dem 0,5-fachen der jeweiligen Querschnittsfläche der Durchgangsöffnungen beträgt, insbesondere zwischen dem 0,02- und dem 0,45-fachen und insbesondere zwischen dem 0,05- und dem 0,4-fachen der jeweiligen Querschnittsfläche der Durchgangsöffnungen.

Das Drehteil kann Ausnehmungen und/oder Durchbrüche aufweisen, die mit den Durchgangskanälen nicht verbunden sind. Die Ausnehmungen und/oder Durchbrüche sind insbesondere parallel zur Drehachse orientiert, d. h. die Ausnehmungen und/oder Durchbrüche erstrecken sich in einer Richtung entlang der Drehachse, insbesondere parallel zur Drehachse. Die Ausnehmungen und/oder Durchbrüche können eine runde, nierenförmige, halbmondförmige, kreissegmentförmige oder oval geformte Kontur aufweisen. Die Kontur der Durchbrüche und/oder Ausnehmungen ist in einer Ebene festgelegt, die senkrecht zur Ausdehnungsrichtung, insbesondere senkrecht zur Drehachse, orientiert ist. Insbesondere ist die Kontur der Ausnehmungen und/oder Durchbrüche entlang der Durchbruchrichtung konstant. Die Ausnehmungen und/oder Durchbrüche können auch konisch oder doppelkonisch ausgeführt sein. Die doppelkonische Ausführung ist im Wesentlichen sanduhr-förmig, sodass die Querschnittsfläche des Durchbruchs zur Stirnseite des Drehteils hin zunimmt, um ein Abfließen der Reinigungsflüssigkeit zu verbessern. Bei einer doppelkonischen Ausführung ist das Ablaufen von Reinigungsflüssigkeit verbessert. Die Ausnehmungen und/oder Durchbrüche verbessern das Spülen der Deckelbereiche der Weiche. Wegen der Ausnehmungen und/oder Durchbrüche ist die Masse des Drehteils reduziert.

Ein Axialantrieb ist erfindungsgemäß vorgesehen, um das axiale Verlagern des Drehteils entlang der Drehachse zu ermöglichen. Dadurch kann das Drehteil unmittelbar in dem Gehäuse axial verlagert werden. Aufgrund der Konizität von Drehteil und Gehäuse ergibt sich der Spülspalt unmittelbar. Mittels des Axialantriebs kann das Drehteil für die Förderstellungmit einer definierten Andrückkraft in das Gehäuse gedrückt werden. Der Axialantrieb ist insbesondere ein Pneumatikantrieb mit einem Zylinder. Der axiale Verstellweg ergibt sich durch den Hub des Zylinders. Aus dem Hub des Zylinders und dem Konuswinkel ergibt sich die Breite des Spülspalts in der Reinigungsstellung. Der Pneumatikantrieb ist unkompliziert und kosteneffektiv ausgeführt. Grundsätzlich sind auch andere Antriebe, insbesondere ein Elektromotor oder ein Hydraulikantrieb denkbar.

Um den Betrieb der Weiche zu verbessern, kann auch ein axial wirkender Pneumatikzylinder mit drei verschiedenen Zielpositionen vorgesehen sein. Die mittlere Position zwischen den beiden Endpositionen kann zum Drehen der Weiche verwendet werden, ohne einen zu großen Spalt zwischen Drehteil und Gehäuse zu erzeugen. Beim Reinigen kann die mittlere Position auch zu einer Erzeugung zusätzlicher Bewegungen der Spülflüssigkeit genutzt werden, wenn das Drehteil hin- und hergefahren wird.

Ein Drehantrieb ist erfindungsgemäß vorgesehen, um das unmittelbare drehantreibbare Verlagern des Drehteils im Gehäuse zu ermöglichen. Der Drehantrieb ist insbesondere als Pneumatikantrieb ausgeführt. Grundsätzlich sind auch andere Antriebe, insbesondere ein Elektromotor oder ein Hydraulikantrieb denkbar.

Während der Reinigung der Weiche kann der Drehantrieb zum Bewegen der Spülflüssigkeit genutzt werden. Bei einem Elektromotor oder einem Hydraulikantrieb lässt sich das Drehteil um 360° durchgehend drehen und erzeugt eine gleichmäßige Bewegung im Spülspalt. Bei einem pneumatischen Drehantrieb kann das Drehteil hin- und hergeschwenkt werden, um zusätzliche Bewegung im Spülspalt zu erzeugen.

Erfindungsgemäß sind der Axialantrieb und der Drehantrieb separat voneinander ausgeführt. Es ist möglich, die beiden Antriebe an den gegenüberliegenden Stirnseiten des Gehäuses anzuordnen. Der Axialantrieb ist insbesondere an der Stirnseite mit der größeren Stirnfläche des Gehäuses angeordnet. Durch die getrennte Herstellung und Anordnung der Antriebe ist der Aufbau der Weiche vereinfacht. Der Montageaufwand und die Herstellkosten sind reduziert. Während des Reinigens und/oder des Schaltens der Weiche können die Antriebe unabhängig voneinander bewegt werden.

Insbesondere ist vorteilhaft, dass das Drehteil, das auch als Drehküken bezeichnet wird, entlang der Drehachse beidseitig im Gehäuse gelagert werden kann. Dadurch ist die Führungsgenauigkeit verbessert und ermöglicht insbesondere einen kleineren Betriebsspalt zwischen der Außenkontur des Drehteils und der Innenkontur des Gehäuses.

Die erfindungsgemäße Anordnung der Ablauföffnung an einem Gehäusegrundkörper und/oder an einem Gehäusedeckel ermöglicht die vorteilhafte Anpassung der Weiche an die verschiedenen Einbauvarianten der Weiche entlang der Förderstrangs. Erfindungsgemäß weist das Gehäuse einen Gehäusegrundkörper mit einem damit verbindbaren Gehäusedeckel auf. Im Betriebszustand der Weiche, also während der Produktförderung oder während des Reinigens der Weiche, ist der Gehäusedeckel mit dem Gehäusegrundkörper verbunden. Der Gehäusedeckel ist vom Gehäusegrundkörper abnehmbar ausgeführt. Der Gehäusedeckel ist mit dem Gehäusegrundkörper lösbar verbunden. Die lösbare Verbindung erfolgt insbesondere durch Befestigungsschrauben. Vorteilhaft ist es, wenn die Innenfläche des Gehäusedeckels und/oder des Gehäusegrundkörpers zur Ablauföffnung hin zumindest bereichsweise geneigt ausgeführt sind. Dadurch wird der selbsttätige Abfluss der Spülflüssigkeit gefördert. Es ist möglich, eine Ablaufrinne an der Innenfläche vorzusehen, um die Spülflüssigkeit gezielt zu der Ablauföffnung hinzuleiten. Die Ablauföffnung ist bezogen auf die Drehachse in einem Randbereich der Stirnfläche angeordnet. Durch die Verwendung der Ablaufrinnen und/oder bei entsprechender Gestaltung der Innenfläche, kann die Ablauföffnung an beliebiger Position der Stirnfläche angeordnet sein.

Erfindungsgemäß ist eine Gehäusedeckel-Dichtung zwischen dem Gehäusegrundkörper und dem Gehäusedeckel angeordnet, wobei die Gehäusedeckel-Dichtung vom Innenraum des Gehäuses frei zugänglich ist, was für die CIP-Reinigung der Weiche besonders vorteilhaft ist.

Die Gehäusedeckel-Dichtung ist produktberührend ausgeführt, also vom Innenraum des Gehäuses für Produkt und Spülflüssigkeit zugänglich. Die Gehäusedeckel-Dichtung ist spaltfrei angeordnet. Dadurch ist verhindert, dass sich Produkt in einem Spalt, insbesondere zwischen dem Gehäusegrundkörper und der Gehäusedeckel-Dichtung bzw. der Gehäusedeckel-Dichtung und dem Gehäusedeckel, ablagern kann und insbesondere zu Keimwachstum führt.

Eine Anordnung der Ablauföffnung gemäß Anspruch 2 gewährleistet ein zuverlässiges Ablaufen der Flüssigkeit aus dem Gehäuse unabhängig von der Einbaulage des Gehäuses entlang des Förderstrangs. Die Stirnflächen des Gehäuses sind im Wesentlichen parallel zu der Förderebene orientiert. Bei der Einbaulage des Gehäuses derart, dass die Förderebene horizontal orientiert ist, ist das Ablaufen der Reinigungsflüssigkeit über die dann an der Stirnseite des Gehäuses, die unterhalb der Förderebene angeordnet ist, problemlos möglich. Wenn die Förderebene vertikal orientiert ist, ist die Ablauföffnung insbesondere an der größeren der beiden Stirnwände des kegelstumpfförmigen Gehäuses angeordnet. Um das selbsttätige Ablaufen der Reinigungsflüssigkeit zu verbessern, ist die Ablauföffnung dann insbesondere an einer 6-Uhr-Position der Stirnwand angeordnet. Vorteilhaft ist es, wenn die Ablauföffnung eine Flächennormale aufweist, die parallel zur Drehachse orientiert ist.

Das Gehäuse kann auch mehrere Ablauföffnungen aufweisen, wobei eine Ablauföffnung gemäß Anspruch 2 an einer tiefsten Stelle des Gehäuses entsprechend der jeweiligen Einbaulage angeordnet ist, um die Reinigung der Weiche zu verbessern.

Eine Anordenbarkeit des Gehäusedeckels am Gehäusegrundkörper gemäß Anspruch 4 ermöglicht die Flexibilität des Einsatzes der Weiche für verschiedene Einbaulagen. Der Gehäusedeckel ist bezüglich der Drehachse in verschiedenen Drehpositionen mit dem Gehäusegrundkörper verbindbar. Der Gehäusedeckel kann in Abhängigkeit der jeweiligen Einbaulage der Weiche am Gehäusegrundkörper so angebracht werden, dass die Ablauföffnung an der tiefsten Stelle der Weiche angeordnet ist, so dass ein selbsttätiges Ablaufen einer Reinigungsflüssigkeit gewährleistet ist. Die Konstruktion der Weiche ist dadurch vereinfacht. Es ist ein Gehäusedeckel ausreichend, der für verschiedene Einbaulagen der Weiche verwendet werden kann. Insbesondere ist ausreichend, wenn am Gehäusedeckel genau eine Ablauföffnung vorgesehen ist. Insbesondere ist der Gehäusedeckel am Gehäusegrundkörper angeflanscht, wobei die für die Flanschverbindung erforderlichen Befestigungsschrauben insbesondere gleich verteilt entlang des Flansches angeordnet sind.

Ein Konuswinkel gemäß Anspruch 5 ermöglicht eine stabile Betriebsweise der Weiche. Insbesondere ist das Risiko der Selbsthemmung und/oder des Kaltverschweißens des Drehteils im Gehäuse reduziert.

Ein Radialspalt gemäß Anspruch 6 dient zum Abdichten des Drehteils im Gehäuse. Der Radialspalt beträgt insbesondere zwischen 0,01 mm und 0,5 mm, insbesondere zwischen 0,02 mm und 0,5 mm, insbesondere zwischen 0,05 mm und 0,3 mm und insbesondere zwischen 0,08 mm und 0,2 mm. Die Abdichtung des Drehteils im Gehäuse mittels des Radialspalts wird auch als Spaltdichtung bezeichnet.

Alternativ kann das Drehteil gemäß Anspruch 7 unmittelbar an der Innenkontur des Gehäuses anliegen. Insbesondere liegt das Drehteil mit der konischen Außenkontur an der korrespondierend konisch ausgebildeten Innenkontur des Gehäuses an. Ein Radialspalt liegt dann nicht vor bzw. beträgt 0 mm. Es ist denkbar, den Radialspalt durch seine axiale Positionierung entlang der Drehachse im Gehäuse einzustellen und/oder in Abhängigkeit des Anlagedrucks des Drehteils im Gehäuse beim Einfahren des Drehteils in das Gehäuse festzulegen. Besonders vorteilhaft ist es, wenn die zumindest eine der aneinander liegenden Oberflächen von Gehäuse und Drehteil eine erhöhte Härte aufweisen. Das Gehäuse und das Drehteil bilden in diesem Fall eine Hart-Weich-Paarung. Es ist auch denkbar, dass die Oberflächen von Gehäuse und Drehteil gehärtet sind. Besonders vorteilhaft ist die Härtung mittels einer Chromschicht.

Konus-Dichtungselemente gemäß Anspruch 8 gewährleisten eine zusätzliche Abdichtung des Drehteils im Gehäuse. Insbesondere werden O-Ringe als Konus-Dichtungselemente verwendet. O-Ringe sind robust in der Anwendung und kosteneffizient einsetzbar.

Alternativ können gemäß Anspruch 9 Durchgangskanal-Dichtungselemente zur Abdichtung des Durchgangskanals verwendet werden. Die Durchgangskanal-Dichtungselemente sind insbesondere aus einem Elastomermaterial hergestellt. Bei der Verwendung der Durchgangskanal-Dichtungselemente ist es vorteilhaft, wenn der Radialspalt zwischen der Außenkontur des Drehteils und der Innenkontur des Gehäuses gegenüber der Spaltdichtung vergrößert ist. Der Radialspalt bei der Verwendung der Durchgangskanal-Dichtungselemente beträgt 0,2 mm bis 2,0 mm, insbesondere 0,3 mm bis 1,2 mm und insbesondere zwischen 0,4 mm und 0,8 mm.

Die Ausführung der Weiche gemäß Anspruch 10 gewährleistet eine zuverlässige und sichere Befestigung der Durchgangskanal-Dichtungselemente in Dichtungsnuten des Drehteils. Insbesondere sind die Durchgangskanal-Dichtungselemente in den Dichtungsnuten jeweils geklemmt angeordnet. Ein unbeabsichtigtes Herausziehen der Dichtungskanal-Dichtungselemente aus der jeweiligen Nut ist ausgeschlossen.

Eine Dichtungsnut, in der das Dichtungskanal-Dichtungselement formschlüssig gehalten sein kann, ist insbesondere schwalbenschwanzförmig ausgeführt. Es ist auch denkbar, dass die Nutbreite nur in einer Richtung mit zunehmender Nuttiefe zunimmt. Vorteilhaft ist es, wenn auch das Durchgangskanal-Dichtungselement im Wesentlichen schwalbenschwanzförmig ausgeführt ist, zumindest in dem Abschnitt, mit dem das Durchgangskanal-Dichtungselement innerhalb der Dichtungsnut angeordnet ist. Es sind auch andere Geometrien für das Durchgangskanal-Dichtungselement und die Dichtungsnut denkbar. Wesentlich ist, dass das Durchgangskanal-Dichtungselement in der Dichtungsnut, insbesondere in radialer Richtung, formschlüssig gehalten ist. Das Durchgangskanal-Dichtungselement füllt die Form der Dichtungsnut weitgehend aus. Das Durchgangskanal-Dichtungselement kann als dreidimensionale Formdichtung oder als im Wesentlichen zweidimensionale Flachdichtung ausgeführt sein. Ein unbeabsichtigtes Herausziehen des Durchgangskanal-Dichtungselements ist verhindert. Die Anordnung des Durchgangskanal-Dichtungselements in der Dichtungsnut ist zuverlässig.

Eine Übergangsfase an dem Durchgangskanal-Dichtungselement gemäß Anspruch 11 gewährleistet einen bündigen Übergang der Oberflächen des Drehteils und des Durchgangskanal-Dichtungselements. Mittels der Übergangsfase ist ein sprunghafter Übergang zwischen der Oberfläche des Drehteils und der Oberfläche des Durchgangskanal-Dichtungselements verhindert. Die Übergangsfase ist beispielsweise als gerade, geneigte Fläche ausgeführt, kann aber insbesondere eine konvex geformte Kontur, die insbesondere auch ballig, kugelförmig oder gekrümmt ausgeführt sein kann, aufweisen.

Zusätzlich oder alternativ zu der Übergangsfase kann das Durchgangskanal-Dichtungselement einen Übergangsabschnitt aufweisen, um einen bündigen Übergang der Oberflächen des Drehteils und des Durchgangskanal-Dichtungselements zu ermöglichen. Der Übergangsabschnitt kann insbesondere zumindest abschnittsweise gerade und insbesondere zumindest abschnittsweise gekrümmt, insbesondere abschnittsweise rund, ausgeführt sein.

Das Durchgangskanal-Dichtungselement kann in einer speziell ausgeformten O-Ringnut angeordnet sein, die durch die Dichtung vollständig ausgefüllt ist. Die Dichtungsnut ist insbesondere totraumfrei. Um die Abdichtwirkung zu verbessern, kann das Durchgangskanal-Dichtungselement als O-Ring mit einteilig angeformter Dichtlippe und/oder mit einer speziell geformten Dichtungskontur ausgeführt sein. Die Dichtlippe kann am Gehäuse anliegen, wenn das Drehteil in einer Endposition in das Gehäuse maximal axial eingefahren ist. Die Dichtungsnut kann insbesondere gerundete Übergänge aufweisen und/oder runde und gerade Abschnitte im Übergang der Drehteiloberfläche zur Dichtungsnut. Das Durchgangskanal-Dichtungselement ist insbesondere komplementär zur Dichtungsnut ausgeführt, wobei dessen Dichtfläche aus der Dichtungsnut mit einem Überstandsabschnitt vorsteht, also aus der Dichtungsnut herausragt.

Vorteilhaft ist es, wenn die Querschnittsform der Dichtung der Kontur der Dichtungsnut entspricht, sodass die Dichtungsnut durch die Dichtung, insbesondere vollständig, ausgefüllt ist.

Vorteilhaft ist es, wenn die Drehbewegung des Drehteils während der Reinigung, also während des Einleitens der Reinigungsflüssigkeit, einen Drehwinkel aufweist, der größer ist als ein erforderlicher Drehwinkel zur Positionsänderung des Drehteils für das Umschalten der Durchgangsöffnungen.

Besonders vorteilhaft ist es, wenn die Drehbewegung des Drehteils einen Drehwinkel aufweist, der größer ist als 360°.

Besonders vorteilhaft ist es, wenn die Drehbewegung und die Axialbewegung des Drehteils gleichzeitig erfolgen, also eine überlagerte Dreh- und Axialbewegung erfolgt. Diese überlagerte Bewegung ist im Wesentlichen eine Schraubbewegung. Alternativ können Drehbewegung und Axialbewegung des Drehteils, insbesondere auch abschnittsweise, sequenziell erfolgen, wobei die Reihenfolge der Sequenz nicht festgelegt sein muss. Wesentlich ist, dass das Drehteil von einer Arbeitsstellung, in der der Durchgangskanal zwischen zwei Durchgangskanal-Öffnungen festgelegt ist, in eine Reinigungsstellung überführt wird, wobei dafür Dreh- und/oder Axialbewegungen des Drehteils erforderlich sein können.

Durch das Verfahren, das die Verfahrensschritte umfasst,
- Beenden der Förderung von Fördergut,
- Beginn der Reinigung,
- Herausziehen des Drehteils mittels eines Axialantriebs entlang der Drehachse axial aus dem Gehäuse,
- Einleiten von Reinigungsflüssigkeit durch mindestens eine der Durchgangsöffnungen,
- Bewegen des Drehteils mittels eines Drehantriebs drehbar um die Drehachse während der Zuführung der Reinigungsflüssigkeit,
- Beenden der Zuführung der Reinigungsflüssigkeit,
- Entfernen der Reinigungsflüssigkeit aus der Weiche,
- Trocknen der Weiche durch Einleiten von heißem Gas,
- Beenden des Trocknungsvorgangs,
- Fortsetzen der Förderung von Fördergut,
ist die Reinigung einer Weiche verbessert. Insbesondere ist das Reinigungsverfahren zuverlässig und insbesondere in einem geschlossenen Zustand der Weiche, d. h. mit montiertem Gehäusedeckel, möglich. Das Verfahren ermöglicht eine CIP-Reinigung.

Während der Zuführung der Reinigungsflüssigkeit wird das Drehteil um die Drehachse bewegt. Zusätzlich kann eine Axialbewegung des Drehteils entlang der Drehachse erfolgen.

Beim Trocknen der Weiche durch Einleiten von heißem Gas kann die Weiche drehbar um die Drehachse und/oder axial zur Drehachse bewegt werden.

Bei einem Verfahren, bei dem das Drehteil während des Einleitens der Reinigungsflüssigkeit in einer Drehmittelposition derart angeordnet ist, dass das Drehteil mit seiner Außenkontur der mindestens einen Durchgangsöffnung zugewandt ist und insbesondere das Drehteil mit einem Durchgangskanal nicht fluchtend mit mindestens einer Durchgangsöffnung angeordnet ist, kann das Drehteil vorteilhaft in einer Drehmittelposition angeordnet sein, wobei in der Drehmittelposition der Durchgangskanal des Drehteils nicht fluchtend mit der mindestens einer Durchgangsöffnung angeordnet ist. Die nicht fluchtende Anordnung umfasst auch Zwischenpositionen, die von der Kanalebene abweichen, aber einen Reinigungseffekt für die Weiche bewirken.

Ein Verfahren, bei dem ein Ventil im Gehäusedeckel erst am Ende der Reinigung vor der Trocknung der Weiche geöffnet wird, um die restliche Reinigungsflüssigkeit ablaufen zu lassen, ermöglicht eine vorteilhafte Trocknung der Weiche.

Bei einer Drehung des Drehteils in eine Zwischenposition können beide Durchgangsöffnungen, insbesondere gleichzeitig, gespült werden und gleichzeitig ist das Drehteil axial in die Spülposition verlagert.

Gemäß einem weiteren Verfahren, das das Drehen des Drehteils umfasst, ist die Betriebsweise der Weiche verbessert. Durch das vollständige Anliegen des Drehteils, insbesondere in dem Bereich der konusförmigen Ausführung am Gehäuseinnenkonus wird ein Radialspalt von bis zu 0 mm ausgeführt. Das bedeutet, dass in dieser Ausgestaltung ein spaltfreier Betrieb möglich ist. Zum Drehen des Drehteils, wird dieses in axialer Richtung geringfügig, beispielsweise um maximal 0,1 mm aus dem Gehäuse zurückgezogen. Daraus resultiert ein Drehspalt zwischen der Außenkontur des Drehteils und der Innenkontur des Gehäuses von 0,2 mm bis 2 mm. Wesentlich ist, dass der Drehspalt minimal ist, aber gerade so groß gewählt wird, dass das Drehteil im Gehäuse drehbar ist. Je kleiner der Drehspalt ist, desto weniger Produkt kann in den Spalt beispielsweise bei einer Produktförderung dringen. Bei einem kleinen Drehspalt steigt aber auch das Risiko, dass im Gehäuse bereits abgesetztes Produkt beim Drehen einen mechanischen Widerstand darstellt und Reibungswärme entsteht. Bei der Festlegung des Drehspalts sind mögliche Produktablagerungen, Antriebskräfte und die Betriebssicherheit zu berücksichtigen.

In einer dritten Position wird das Drehteil in eine Spülstellung axial gezogen beispielsweise um bis zu 40 mm. Dadurch entsteht ein Spülspalt mit einer Spaltbreite von 0,15 mm bis 3,0 mm. Dazu erhält der Axialantrieb, der insbesondere als Zylinder ausgeführt ist, drei definierte Positionen, die angefahren werden müssen.

Ausführungsbeispiele der Erfindung werden nachfolgend anhand der Zeichnung näher erläutert. In dieser zeigen:
- Fig. 1: eine perspektivische Darstellung einer Drei-Wege-Weiche,
- Fig. 2: eine vereinfachte Prinzipdarstellung der Einbausituation der Weiche mit horizontaler Durchgangsrichtung und einem Abgang nach unten,
- Fig. 3: eine Fig. 2 entsprechende Darstellung mit horizontaler Durchgangsrichtung und einem Abgang nach oben,
- Fig. 4: eine Fig. 2 entsprechende Darstellung mit einer senkrechten Durchgangsrichtung und einem Abgang nach oben,
- Fig. 5: eine Fig. 2 entsprechende Darstellung der Weiche mit senkrechter Durchgangsrichtung und einem Abgang schräg nach unten,
- Fig. 6: eine Explosions-Darstellung der Weiche in Fig. 1,
- Fig. 7: eine weitere perspektivische Darstellung der Weiche gemäß Fig. 1 mit teilgeschnittenem Gehäuse,
- Fig. 8: eine Ansicht der Weiche gemäß Pfeil VIII gemäß Fig. 1,
- Fig. 9: eine Schnittdarstellung gemäß Schnittlinie IX-IX in Fig. 1 mit der Weiche in Abgangsanordnung,
- Fig. 10: eine Fig. 9 entsprechende Schnittdarstellung der Weiche in Durchgangsanordnung,
- Fig. 11: eine auf die Förderrichtung bezogene Längsschnittdarstellung der Weiche in der Durchgangsanordnung,
- Fig. 12: eine auf die Förderrichtung bezogene Querschnittsdarstellung der Weiche in einer Spülanordnung,
- Fig. 13: eine Fig. 11 entsprechende Schnittdarstellung einer Weiche gemäß einer weiteren Ausführungsform mit einer Distanzscheibe zur Einstellung der Spülanordnung,
- Fig. 14: eine Fig. 11 entsprechende Schnittdarstellung gemäß einer weiteren Ausführungsform der Weiche, wobei das Drehteil Durchgangskanal-Dichtungselemente aufweist,
- Fig. 15: eine vergrößerte Detaildarstellung des Durchgangskanal-Dichtungselements gemäß Fig. 14 ,
- Fig. 16: eine perspektivische Darstellung eines Drehteils der Weiche gemäß Fig. 14,
- Fig. 17: eine Fig. 11 entsprechende Darstellung einer Weiche gemäß einer weiteren Ausführungsform, bei der das Drehteil mit seiner Außenkontur unmittelbar an einer Innenkontur des Gehäuses anliegt,
- Fig. 18: eine Fig. 2 entsprechende Schnittdarstellung einer Weiche mit dem Drehteil in einer rotatorischen Zwischenstellung zum Reinigen mit großem axialem Spalt in CIP-Spülstellung,
- Fig. 19: eine Seitenansicht einer Weiche gemäß einer weiteren Ausführungsform, bei der eine Ablauföffnung am Gehäusegrundkörper angeordnet ist,
- Fig. 20: eine Fig. 11 entsprechende Schnittdarstellung einer Weiche gemäß einer weiteren Ausführungsform mit zwei Ablauföffnungen und einem Drehteil mit Durchbruch,
- Fig. 21: eine vergrößerte, perspektivische Darstellung es Drehteils gemäß Fig. 20,
- Fig. 22: eine weitere Schnittdarstellung der Weiche gemäß Fig. 20,
- Fig. 23: eine Fig. 21 entsprechende Darstellung eines Drehteils gemäß einer weiteren Ausführungsform mit nierenförmigem Durchbruch,
- Fig. 24: eine Schnittdarstellung eines Drehteils gemäß einer weiteren Ausführungsform mit doppeltkonischem Durchbruch,
- Fig. 25: eine Fig. 23 entsprechende Darstellung eines Drehteils gemäß einer weiteren Ausführungsform als Segmentbauteil,
- Fig. 26: eine Schnittdarstellung des Drehteils gemäß Fig. 25,
- Fig. 27: eine Ansicht des Drehteils in Fig. 25 gemäß Pfeil XXVII,
- Fig. 28: eine Fig. 10 entsprechende Darstellung einer Weiche gemäß einer weiteren Ausführungsform mit Durchgangskanal-Dichtungselementen in weiterer Ausgestaltung,
- Fig. 29: eine vergrößerte Schnittansicht einer Dichtungsnut der Weiche gemäß Fig. 28,
- Fig. 30: eine vergrößerte Schnittdarstellung gemäß Fig. 29 mit eingelegtem Durchgangskanal-Dichtungselement,
- Fig. 31: eine Fig. 30 entsprechende Darstellung einer weiteren Ausführungsform des Durchgangskanal-Dichtungselements,
- Fig. 32: eine Fig. 20 entsprechende, vergrößerte Schnittdarstellung einer Weiche gemäß einer weiteren Ausführungsform mit einem Ventilkörper an der Ablauföffnung,
- Fig. 33-35: weitere Ausführungsformen eines Ventikörpers für die Ablauföffnung.

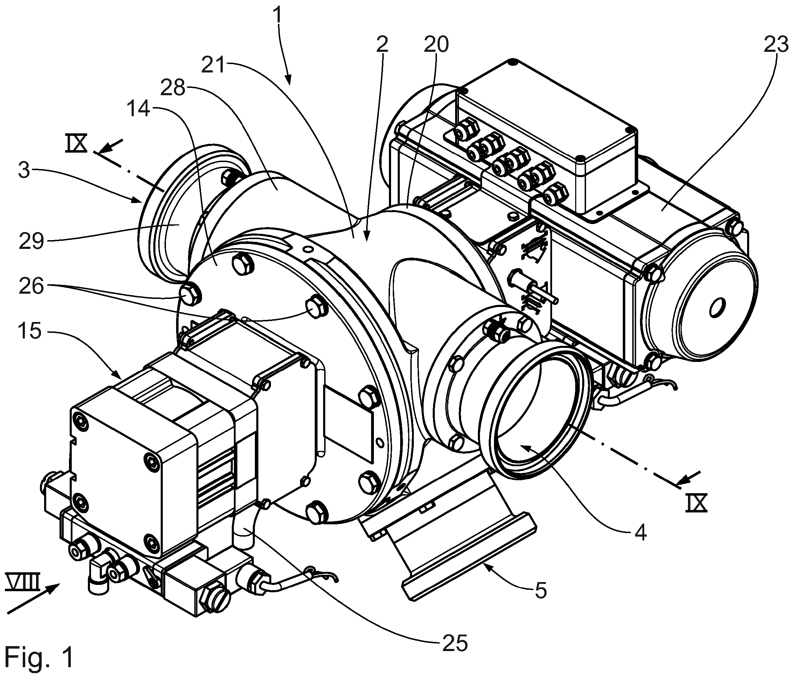

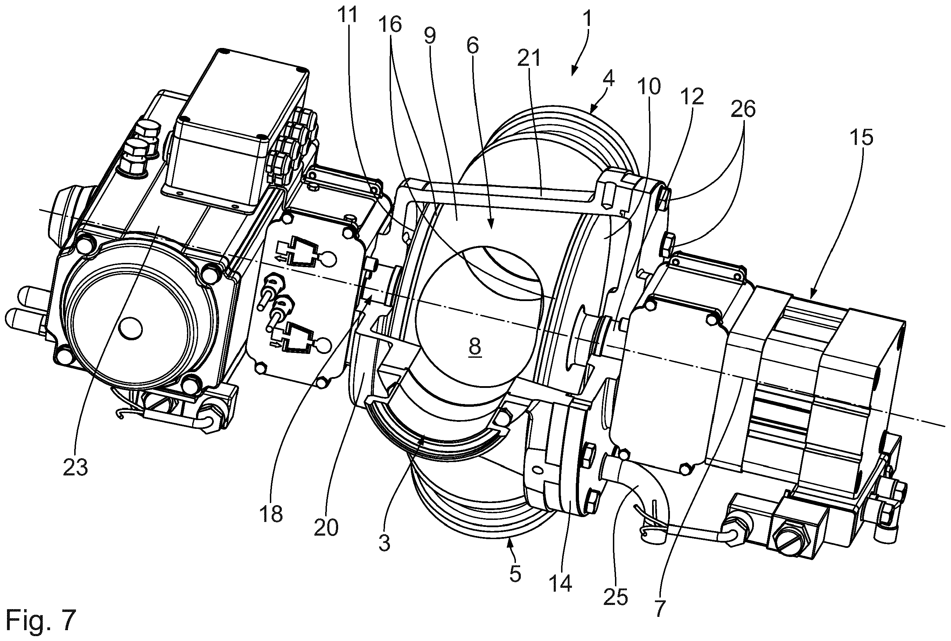

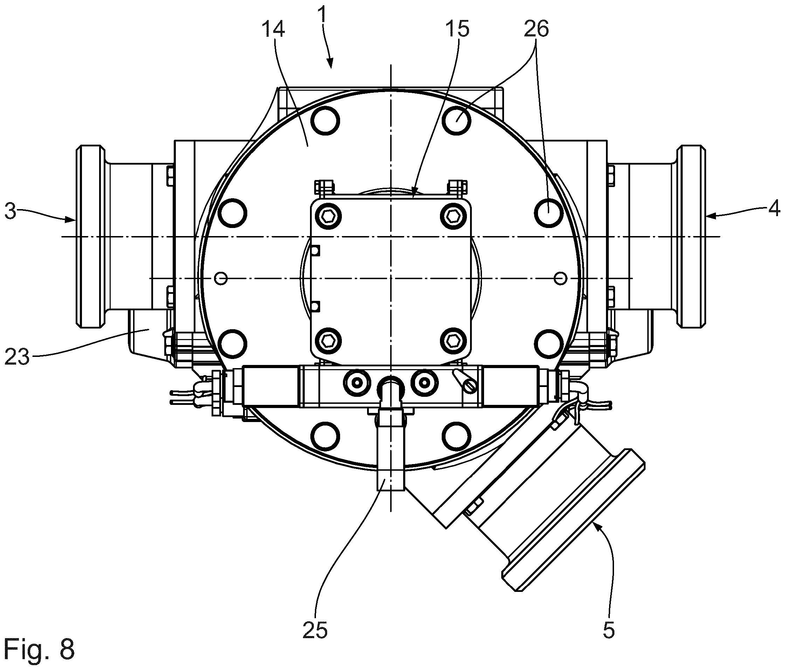

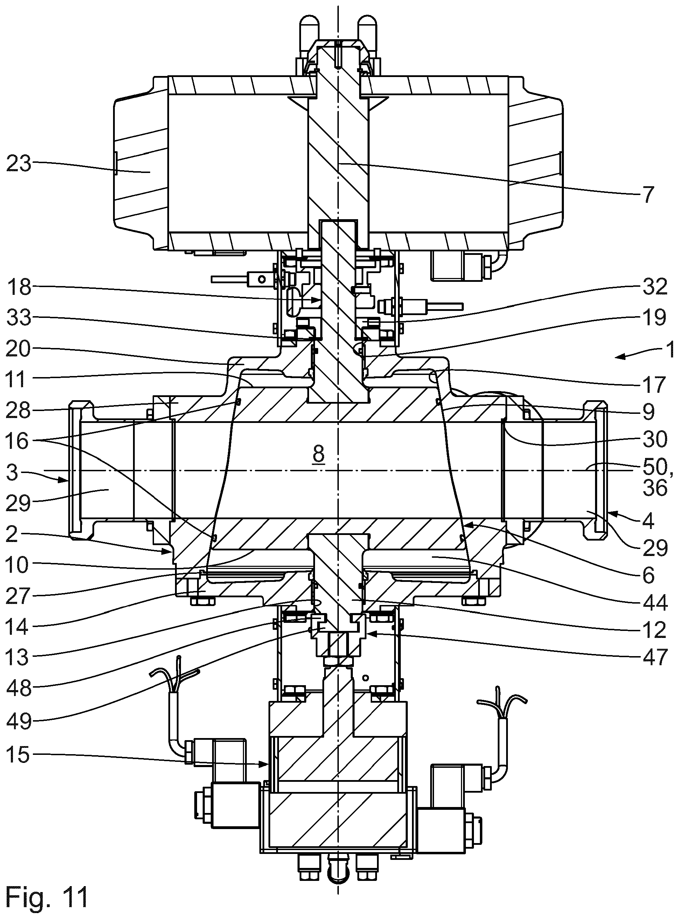

Eine Fig. 1 bis Fig. 12 dargestellte Weiche 1 dient zur Förderung von Fördergut. Das Fördergut ist beispielsweise Schüttgut, insbesondere partikelförmiges und/oder pulverförmiges Material, beispielsweise Kunststoffgranulat oder partikel- und/oder pulverförmige Lebensmittel. Das Schüttgut wird insbesondere pneumatisch gefördert. Das Fördergut kann auch eine pastöse Masse und/oder Flüssigkeit sein, also ein Fluid.

Die Weiche 1 ist als Drei-Wege-Weiche ausgeführt. Die Weiche 1 weist ein Gehäuse 2 auf, an dem eine erste Durchgangsöffnung 3, eine zweite Durchgangsöffnung 4 und eine dritte Durchgangsöffnung 5 vorgesehen sind. Die Durchgangsöffnungen 3, 4, 5 dienen zum Zuführen und/oder zum Abführen des Förderguts. Die Durchgangsöffnungen 3, 4, 5, insbesondere die Mittellinien der Durchgangsöffnungen 3, 4, 5, legen eine Förderebene fest.

In dem Gehäuse 2 ist ein Drehteil 6 angeordnet. Das Drehteil 6 weist eine Drehachse 7 auf, die senkrecht zur Förderebene orientiert ist. Das Drehteil 6 ist in dem Gehäuse 2 entlang der Drehachse 7 axial verlagerbar angeordnet. Die initiale Spalteinstellung zwischen der Außenkontur 9 des Drehteils 6 und der Innenkontur 17 des Gehäuses 2 erfolgt über die Festlegung der Axialposition des Drehteils 6 im Gehäuse 2. Diese Spalteinstellung erfolgt gemäß der gezeigten Ausführungsform mit einer Gewindehülse 32, über die beispielsweise mittels eines Werkzeugs von außerhalb des Gehäuses 2 eine stufenlose, also kontinuierliche Axialverstellung des Drehteils 6 im Gehäuse 2 möglich ist. Das Drehteil 6 ist im Gehäuse 2 um die Drehachse 7 drehbar angeordnet.

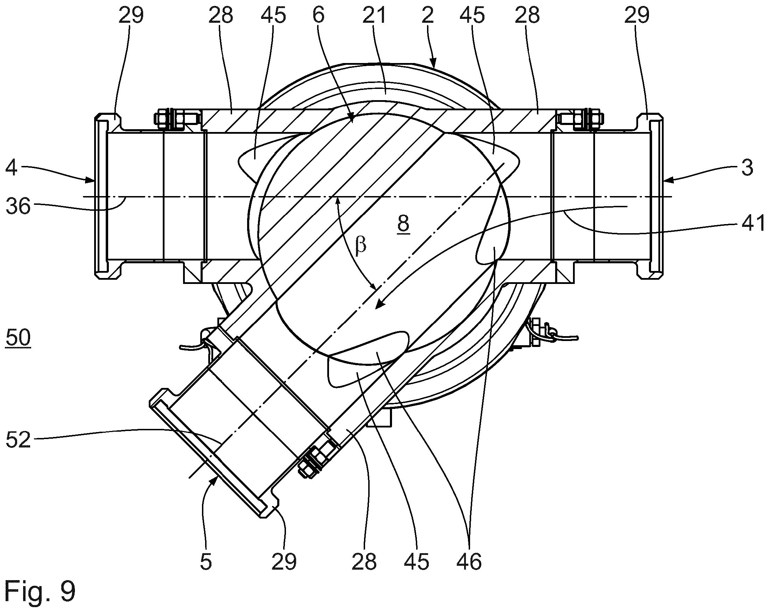

Das Drehteil 6 weist einen Durchgangskanal 8 auf. Das Drehteil 6 ist insbesondere in einer in Fig. 9 dargestellten Abgangsanordnung anordenbar, in der die erste Durchgangsöffnung 3 mit der dritten Durchgangsöffnung 5 über den Durchgangskanal 8 unmittelbar verbunden sind. In der Abgangsanordnung ist die zweite Durchgangsöffnung 4 durch das Drehteil 6 abgedichtet. Die Drei-Wege-Weiche 1 ermöglicht also, dass in der Abgangsanordnung die Durchgangsöffnungen 3, 5 für eine Materialförderung entlang einer Abgangsrichtung 41 miteinander verbunden sind und die Durchgangsöffnung 4 durch das Drehteil 6 abgesperrt ist.

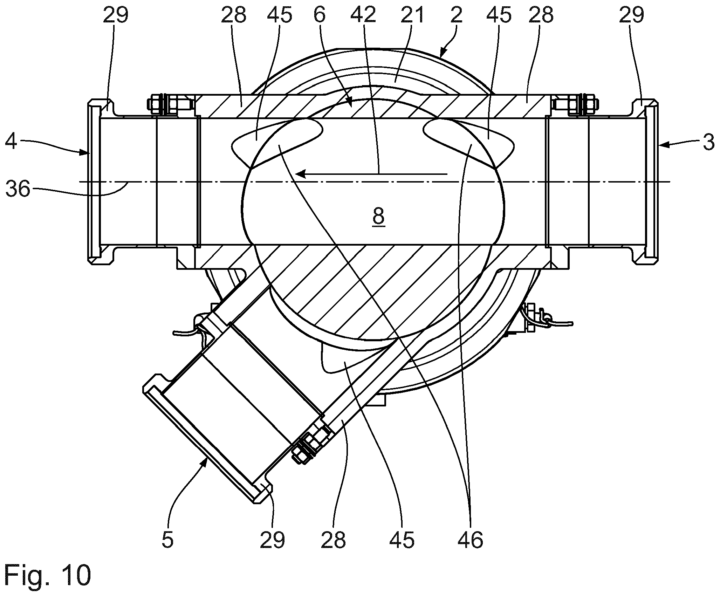

Entsprechend zeigt Fig. 10 eine Durchgangsanordnung, in der die erste Durchgangsöffnung 3 mit der zweiten Durchgangsöffnung 4 über den Durchgangskanal 8 miteinander zur Materialförderung entlang einer Durchgangsrichtung 42 verbunden sind. Zwischen der ersten Durchgangsöffnung 3 und der zweiten Durchgangsöffnung 4 ist die Durchgangsrichtung 42 geradlinig ausgeführt. Die erste Durchgangsöffnung 3 und die zweite Durchgangsöffnung 4 sind an dem Gehäuse 2 im Wesentlichen gegenüberliegend, insbesondere diametral gegenüberliegend angeordnet. Die dritte Durchgangsöffnung 5 ist durch das Drehteil 6 abgedichtet. Bezüglich der Durchgangsrichtung 42 zwischen der ersten Durchgangsöffnung 3 und der zweiten Durchgangsöffnung 4 ist die Abgangsrichtung 41 von der ersten Durchgangsöffnung 3 zu der dritten Durchgangsöffnung 5 unter einem Abgangswinkel β abgewinkelt. Gemäß dem gezeigten Ausführungsbeispiel beträgt der Abgangswinkel β 45°. Vorteilhaft ist es, wenn der Abgangswinkel β zwischen 30° und 90° beträgt, insbesondere zwischen 40° und 60° und insbesondere zwischen 42° und 50°.

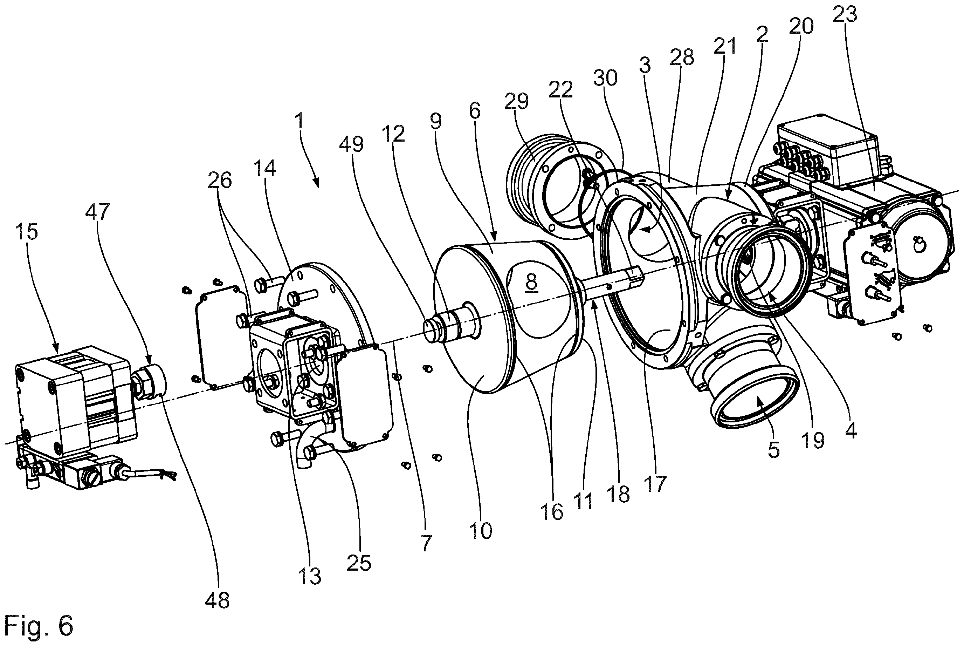

Das Drehteil 6 ist bezüglich seiner Drehachse 7 im Wesentlichen als Kegelstumpf ausgeführt, weist also entlang der Drehachse 7 zumindest abschnittsweise eine konisch ausgeführte Außenkontur 9 auf. Gemäß der Darstellung in Fig. 6 ist die Drehachse die Explosionsachse. Der Durchgangskanal 8 ist senkrecht zur Drehachse 7 orientiert. Der Durchgangskanal ist bezüglich der Drehachse 7 exzentrisch am Drehteil 6 angeordnet.

Die Kegelstumpf-Geometrie des Drehteils 6 ist durch eine größere Stirnfläche 10 und eine kleinere Stirnfläche 11 begrenzt. Die Stirnflächen 10, 11 sind gemäß dem gezeigten Ausführungsbeispiel jeweils senkrecht zur Drehachse 7 orientiert und plan ausgeführt. Die Stirnflächen 10, 11 können auch jeweils konvex geformt sein und insbesondere zumindest abschnittsweise geneigt und/oder gekrümmt ausgeführt sein.

An der größeren Stirnfläche 10 ist an dem Drehteil 6 eine Axialantriebswelle 12 befestigt. Die Axialantriebswelle 12, die durch eine erste Öffnung 13 in einem Gehäusedeckel 14 aus dem Gehäuse 2 herausgeführt ist, ist über eine Kupplung 47 mit einem Axialantrieb 15 verbunden. Der Axialantrieb 15 ist als Pneumatikantrieb, insbesondere als Pneumatikzylinder, insbesondere als Hubantrieb ausgeführt. Der Axialantrieb 15 kann auch als Elektromotor oder Hydraulikzylinder ausgeführt sein. Der Axialantrieb 15 ermöglicht eine angetriebene Axialverlagerung des Drehteils 6 im Gehäuse 2 entlang der Drehachse 7. Der Axialantrieb 15 kann mit einer Zwischenposition ausgeführt sein, die es erlaubt, das Drehteil 6 im Gehäuse 2 entlang der Drehachse 7 in eine Axial-Zwischenposition zu verlagern. In der Axial-Zwischenposition des Drehteils 6 im Gehäuse 2 kann die Weiche 1 mit einem kleinen Spalt zwischen 0,01 mm und 0,5 mm betrieben und/oder gedreht werden.

Die Kupplung 47 ermöglicht eine in Axialrichtung der Drehachse 7 gerichtete Verbindung zwischen dem Axialantrieb 15 und der Axialantriebswelle 12 zur Übertragung von Axialkräften. Bezüglich der Drehachse 7 ist die Kupplung 47 drehmomentenfrei ausgeführt. Eine Drehbewegung des Drehteils 6 wird durch die Kupplung 47 nicht auf den Axialantrieb 15 übertragen. Dazu ist die Kupplung 47 in dem gezeigten Ausführungsbeispiel hülsenförmig ausgeführt mit einem der Axialantriebswelle 12 zugewandten, radial nach innen gerichteten Ringbund 48. In axialer Richtung der Drehachse 7 hintergreift der Ringbund 48 einen Ringscheibenabschnitt 49 der Axialantriebswelle 12. Der Ringscheibenabschnitt 49 ist drehbar in dem Hülsenabschnitt der Kupplung 47 angeordnet. Der Ringscheibenabschnitt 49 ist einteilig an der Axialantriebswelle 12 angeformt und stirnseitig an der Axialantriebswelle 12 angeordnet.

An dem Drehteil 6 sind zwei Konus-Dichtungselemente 16 vorgesehen, die bezüglich der Drehachse 7 beabstandet zueinander an dem Drehteil 6 angeordnet sind. Die Konus-Dichtungselemente 16 sind gemäß dem gezeigten Ausführungsbeispiel jeweils als O-Ring ausgeführt. Die Konus-Dichtungselemente 16 dienen zur Abdichtung der Konusfläche, also der konischen Außenkontur 9 an der korrespondierenden Innenkontur 17 des Gehäuses 2.

Die Konus-Dichtungselemente 16 sind jeweils benachbart zu der größeren Stirnfläche 10 bzw. der kleineren Stirnfläche 11 angeordnet. Insbesondere ist der Durchgangskanal 8 entlang der Drehachse 7 zwischen den beiden Konus-Dichtungselementen 16 angeordnet.

An der kleineren Stirnfläche 11 ist an dem Drehteil 6 eine Drehantriebswelle 18 befestigt, die durch eine zweite Öffnung 19 im Gehäuseboden 20, der insbesondere einteilig mit dem Gehäusegrundkörper 21 ausgeführt ist, herausgeführt werden kann. Die Drehantriebswelle 18 weist zumindest abschnittsweise entlang der Drehachse 7 einen Drehmomentübertragungsabschnitt 22 auf, der in der Ebene senkrecht zur Drehachse 7 unrund ausgeführt ist und gemäß dem gezeigten Ausführungsbeispiel eine Außen-Vierkant-Geometrie aufweist. Mit dem Drehmomentübertragungsabschnitt 22 kann die Drehantriebswelle 18 mit einem Drehantrieb 23 in drehmomentübertragenderweise gekoppelt werden. Mittels des Drehantriebs 23 kann das Drehteil 6 in dem Gehäuse 2 bezüglich der Drehachse 7 drehangetrieben werden. Der Drehantrieb 23 ist als pneumatischer Drehantrieb ausgeführt. Der Drehantrieb 23 kann auch als Elektromotor, Hydraulikmotor oder Hydraulikzylinder ausgeführt sein. Der Drehantrieb 23 ermöglicht eine Drehung des Drehteils 6 zwischen Abgangsanordnung gemäß Fig. 9 und der Durchgangsanordnung gemäß Fig. 10.

Im Gehäuse 2, insbesondere in den den Durchgangsöffnungen 3, 4, 5 zugeordneten Verbindungsstutzen 28 sind an den Innenflächen taschenförmige Vertiefungen 45 vorgesehen. Die Vertiefungen 45 wirken jeweils mit einer korrespondierenden Freiformfläche 46 im Durchgangskanal 8 des Drehteils 6 zusammen. Die taschenförmigen Vertiefungen 45 sind im Gehäuse 2 unsymmetrisch bezüglich einer Längsmittelebene 50 ausgebildet, die durch die Achsen 36, 52 der Durchgangsöffnungen 3, 4, 5 aufgespannt ist. Die Längsmittelebene 50 entspricht der Zeichnungsebene gemäß Fig. 9 und 10. Insbesondere in der Abgangsordnung gemäß der Fig. 9 aber auch in der Durchgangsanordnung gemäß Fig. 10 ist ein Übergang am Durchgangskanal 8 kantenfrei, also stoßfrei, ausgeführt. Ein geometrischer Stoß ist durch die Anpassung der Konturen in den Verbindungsstutzen 28 und im Durchgangskanal 8 vermieden. Bezüglich der Vermeidung des geometrischen Stoßes wird auf die DE 39 22 240 C2 verwiesen.

An dem Gehäusedeckel 14 ist gemäß dem gezeigten Ausführungsbeispiel eine Ablauföffnung 24 vorgesehen, an der ein Ablaufkrümmer 25 befestigt ist. Der Ablaufkrümmer 25 ist insbesondere an den Gehäusedeckel 14 angeschweißt. Der Ablaufkrümmer 25 bildet einen Teil der Ablaufleitung.

Gemäß dem gezeigten Ausführungsbeispiel ist die Ablauföffnung 24 in den Gehäusedeckel 14 integriert. Der Gehäusedeckel 14 weist eine geneigte Innenfläche auf, die zu der Ablauföffnung 24 hin geneigt ausgeführt ist. Die Innenfläche des Gehäusedeckels 14 ist nach außen hin abfallend ausgeführt. Die Ablauföffnung 24 ist bezogen auf die Drehachse 7 insbesondere maximal radial beabstandet angeordnet. Die Ablauföffnung 24 ist in einer horizontalen Einbaulage, in der der Gehäusedeckel 14 vertikal orientiert ist, an einer tiefsten Stelle des Gehäuses 2 der Weiche 1 angeordnet. Über die Ablauföffnung 24 und den Ablaufkrümmer 25 kann eine Flüssigkeit selbsttätig aus dem Innenraum des Gehäuses 2 infolge der Schwerkraft ablaufen.

Dadurch, dass der Gehäusedeckel 14 in verschiedenen Drehpositionen um die Drehachse 7 mit dem Gehäusegrundkörper verschraubt werden kann, ist es ausreichend, genau eine Ablauföffnung 24 am Gehäusedeckel vorzusehen. In Abhängigkeit der Einbaulage der Weiche 1 kann der Gehäusedeckel 14 so am Gehäusegrundkörper 21 angeschraubt werden, dass die Ablauföffnung 24 die tiefste Stelle des Gehäuses 2 bildet.

Der Gehäusedeckel 14 ist an den Gehäusegrundkörper 21 mittels mehrerer Befestigungsschrauben 26 angeschraubt. Der Gehäusedeckel 14 ist an den Gehäusegrundkörper 21 mittels einer umlaufenden Ringdichtung 27 abgedichtet angeordnet. Die Ringdichtung 27 ist eine Gehäusedeckel-Dichtung. Die Ringdichtung 27 ist vom Innenraum des Gehäuses 2 der Weiche 1 frei zugänglich ausgeführt. Die Ringdichtung 27 ist produktberührend ausgeführt. Die Ringdichtung 27 ermöglicht eine Nassreinigung des Gehäuses 2, ohne dass das Gehäuse 2 hierzu geöffnet werden muss. Die Weiche 1 kann in geschlossenem Zustand flüssig gereinigt werden. Die Weiche 1 ermöglicht eine Flüssigreinigung unter Cleaning in Place-Hygiene-Ansprüchen.

Bezüglich der Drehachse 7 ist die Außenkontur 9 des Drehteils 6 mit dem Konuswinkel κ ausgeführt. Der Konuswinkel κ beträgt gemäß dem gezeigten Ausführungsbeispiel 20°. Vorteilhaft ist es, wenn der Konuswinkel κ zwischen 5° und 80°, insbesondere zwischen 10° und 40°, insbesondere zwischen 15° und 25° beträgt.

Für einen vereinfachten und verbesserten Anschluss von Förderleitungen an das Gehäuse 2 sind an den Durchgangsöffnungen 3, 4, 5 jeweils einteilig am Gehäusegrundkörper 21 angeformte Verbindungsstutzen 28 ausgeführt. An die Verbindungsstutzen 28 kann jeweils vorteilhaft ein Rohrstutzen 29 abgedichtet mittels einer produktberührenden Flanschdichtung 30 angeflanscht werden. Durch die Rohrstutzen 29 wird eine standardisierte Verbindungsschnittstelle bereitgestellt, um die Weiche 1 in eine Förderanlage zu integrieren. Die Rohrstutzen 29 können unkompliziert am Gehäuseangeschraubt werden. Dadurch ist es möglich, die Weiche 1 durch geeignete Auswahl der Rohrstutzen 29 an den erforderlichen Rohrquerschnitt und Flanschanschluss einer Förderanlage anzupassen. Die Weiche kann flexibel und unkompliziert in eine bestehende Förderanlage integriert werden.

Nachfolgend wird die Funktion der Weiche 1 mit Spaltdichtung näher erläutert.

Für die Förderung eines Förderguts entlang der Durchgangsrichtung 42 oder der Abgangsrichtung 41 wird das Drehteil 6 zunächst abgedichtet in dem Gehäuse 2 angeordnet. Für eine abgedichtete Anordnung des Drehteils 6 im Gehäuse 2 wird das Drehteil 6 mittels des Axialantriebs 15 entlang der Drehachse 7 in das Gehäuse 2 gedrückt, bis das Drehteil 6 mit einem definierten Radialspalt zwischen der Außenkontur 9 und der Innenkontur 17 im Gehäuse 2 angeordnet ist. Der Radialspalt beträgt insbesondere zwischen 0,01 mm und 0,5 mm, insbesondere zwischen 0,02 mm und 0,5 mm, insbesondere zwischen 0,05 mm und 0,3 mm, und insbesondere zwischen 0,08 mm und 0,2 mm.

In dieser Anordnung ist das Drehteil 6 mittels der Konus-Dichtungselemente 16 im Gehäuse 2 abgedichtet. Das Drehteil 6 befindet sich in einer Förderposition, die auch als Förderanordnung bezeichnet ist. Die Spaltdichtung kann auch ohne die Konus-Dichtungselemente 16 ausgeführt sein. Eine Materialförderung über die miteinander verbundenen Durchgangsöffnungen 3, 5 bzw. 4, 5 entlang des Durchgangskanals 8 ist abgedichtet möglich. Für eine Änderung des Materialförderwegs von der Durchgangsrichtung 42 auf die Abgangsrichtung 41 oder umgekehrt wird das Drehteil 6 mittels des Drehantriebs 23 um die Drehachse 7 gedreht. Die Drehung des Drehteils 6 und der Drehachse 7 kann in der Förderanordnung des Drehteils 6 im Gehäuse 2 erfolgen. Das Drehteil 6 ist in der abgedichteten Anordnung im Gehäuse 2 um die Drehachse 7 drehbar. Um die Drehung des Drehteils 6 zu vereinfachen, kann vor der Drehbewegung das Drehteil 6 entlang der Drehachse 7 in dem Gehäuse 2 aus der abgedichteten Anordnung gezogen werden, also zum Axialantrieb 15 hin verlagert werden.

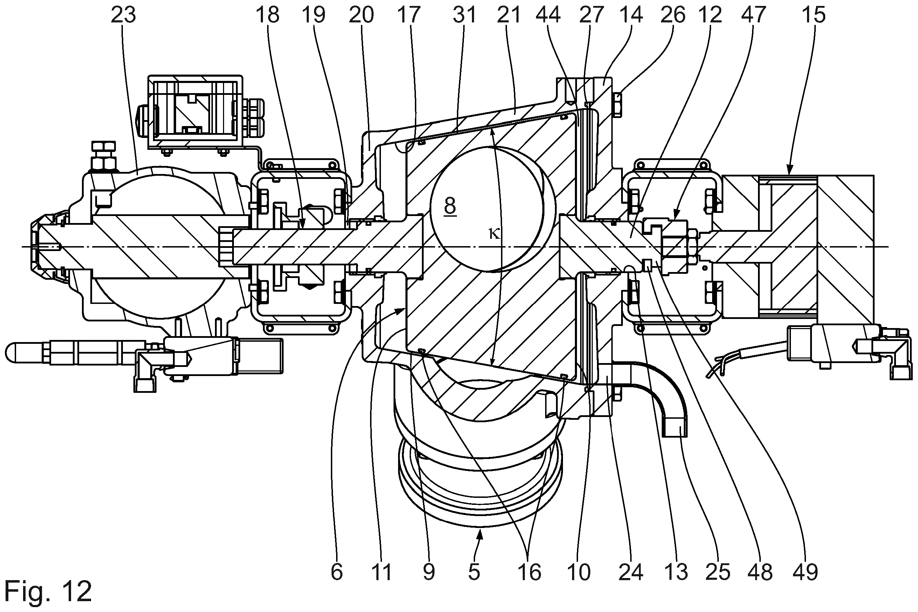

Für eine Reinigung der Weiche 1 erfolgt insbesondere zunächst ein Spülen des Durchgangskanals 8 über die mit der Weiche 1 verbundenen Förderleitungen in Durchgangsrichtung 42 und in Abgangsrichtung 41, wobei das Drehteil 6 insbesondere in der Förderposition verbleibt. Anschließend wird das Drehteil 6 axial entlang der Drehachse 7 in dem Gehäuse 2 zu dem Gehäusedeckel 14 hinverlagert. Die Spülanordnung der Weiche 1 ist in Fig. 12 gezeigt. Dazu weist das Gehäuse 2 einen Freiraum 44 auf, in den das Drehteil 6 mit der größeren Stirnfläche 10 hineinverlagert werden kann. Während der Axialverlagerung des Drehteils 6 bleibt das Gehäuse 2 geschlossen. Für die Reinigung der Weiche 1, insbesondere für das Umspülen des Drehteils 6 und der Innenflächen des Gehäusegrundkörpers 20 und des Gehäusedeckels 14, ist ein Öffnen des Gehäuses 2 nicht erforderlich.

Durch diese Axialverlagerung wird der Radialspalt zwischen der Außenkontur 9 und der Innenkontur 17 vergrößert. In der Reinigungsanordnung beziehungsweise Spülanordnung der Weiche 1 gemäß Fig. 12 weist der Reinigungsspalt 31 eine Größe von etwa 1,5 mm bis 2,0 mm auf. Vorteilhaft ist es, wenn der Reinigungsspalt 31 eine Größe von 0,5 mm bis 4 mm, insbesondere zwischen 1,0 mm bis 3,0 mm, aufweist.

Der Reinigungsspalt 31 wird auch als Spülspalt bezeichnet. Der Reinigungsspalt 31 ermöglicht es, dass Reinigungsflüssigkeit, die beispielsweise über die Durchgangsöffnungen 3, 4, 5 in das Gehäuse 2 zugeführt wird, auch die Flächenabschnitte der Außenkontur 9 des Drehteils 6, der Innenkontur 17 des Gehäuses 2 und die Innenfläche des Gehäusedeckels 14 mit Reinigungsflüssigkeit benetzt. Der gesamte Innenraum des Gehäuses 2, insbesondere der Spalt zwischen der Außenkontur 9 und der Innenkontur 17, kann mit Reinigungsflüssigkeit gespült werden. Die Reinigungsanordnung gemäß Fig. 12 wird auch als Spülanordnung bezeichnet.

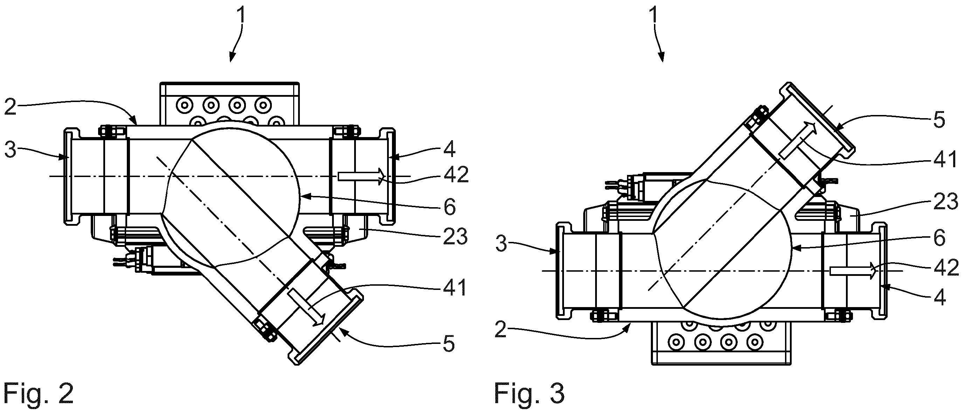

Dadurch ist es möglich, Ablagerungen und unbeabsichtigte Verunreinigungen in der Weiche zu entfernen. Die Reinigungsflüssigkeit kann das Gehäuse 2 durch die am tiefsten Punkt des Gehäuses 2 angeordnete Ablauföffnung 24 infolge der Schwerkraft selbsttätig verlassen. Fig. 12 zeigt die Weiche 1 in einer Einbauposition, bei der der Gehäusedeckel 14 vertikal orientiert ist. In der in Fig. 12 gezeigten Anordnung ist die Durchgangsrichtung 42 horizontal orientiert. Die Abgangsrichtung 41 ist nach schräg unten gerichtet. Die Förderebene ist vertikal orientiert. Diese Anordnung ist schematisch in Fig. 2 gezeigt.

Grundsätzlich möglich ist auch eine Einbauposition mit horizontaler Durchgangsrichtung 42 und einer Abgangsrichtung 41 nach schräg oben wie in Fig. 3. Auch in dieser Anordnung ist die Förderebene vertikal orientiert. Entsprechend ist der Gehäusedeckel 14 vertikal orientiert.

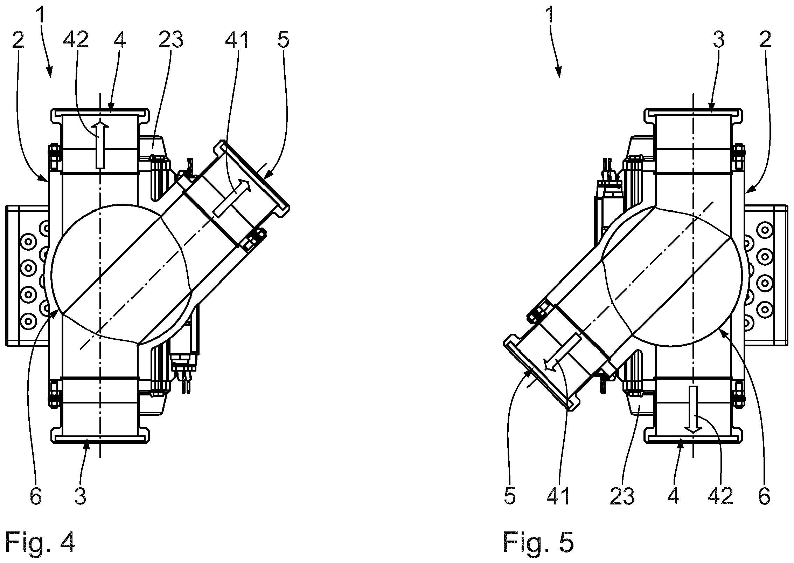

Es ist auch eine Einbausituation möglich, bei der die Durchgangsrichtung 42 vertikal orientiert ist mit einer Abgangsrichtung 41 nach schräg oben (vgl. Fig. 4) oder nach schräg unten (vgl. Fig. 5). In beiden Fällen ist die Förderebene vertikal orientiert. In beiden Fällen ist der Gehäusedeckel 14 vertikal orientiert.

Die Weiche kann auch eingesetzt werden, wenn der Gehäusedeckel 14 horizontal orientiert ist. Vorteilhaft ist es, wenn der Gehäusedeckel 14 in horizontaler Einbaulage an der Oberseite des Gehäuses 2 angeordnet ist. Die Entnahme des Drehteils 6, insbesondere zu Wartungs- und/oder Reinigungszwecken ist vereinfacht. Grundsätzlich denkbar ist auch die Anordnung, bei der der Gehäusedeckel 14 horizontal orientiert und an der Unterseite des Gehäuses 2 angeordnet ist.

Bei der erfindungsgemäßen Weiche sind die Einbaulage und die Art der Dichtung des Drehteils 6 im Gehäuse 2 voneinander unabhängig. Jede mögliche Dichtungsart des Drehteils gegenüber dem Gehäuse kann in jeder Einbaulage verwendet werden.

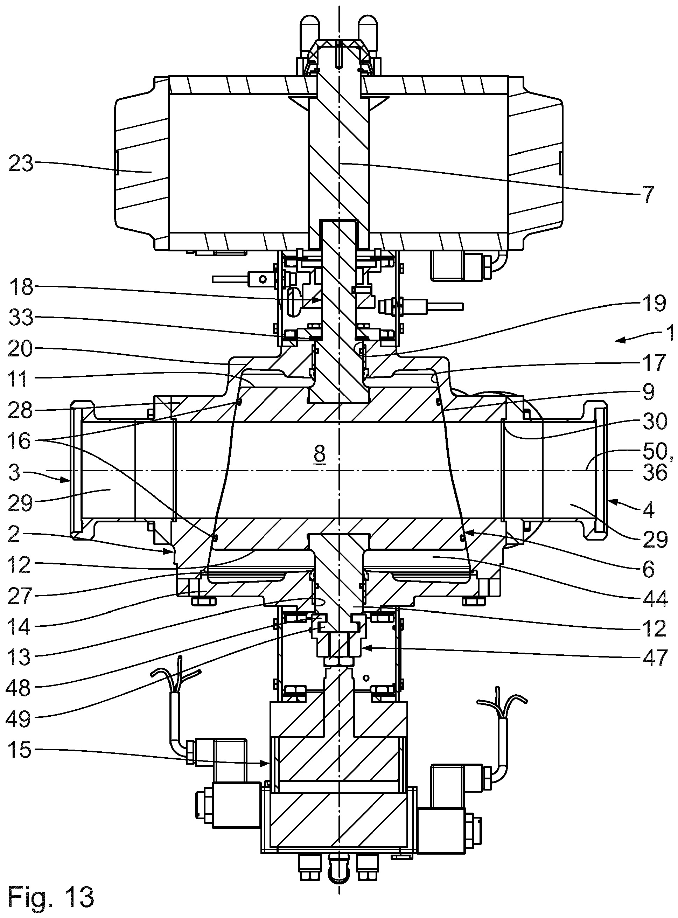

Fig. 13 zeigt eine weitere Ausführung einer Weiche 1, wobei die Axialeinstellung des Drehteils 6 im Gehäuse 2 mittels einer Distanzscheibe 33 erfolgt. Dadurch ist die Positionierung des Drehteils 6 im Gehäuse 2 eindeutig festgelegt.

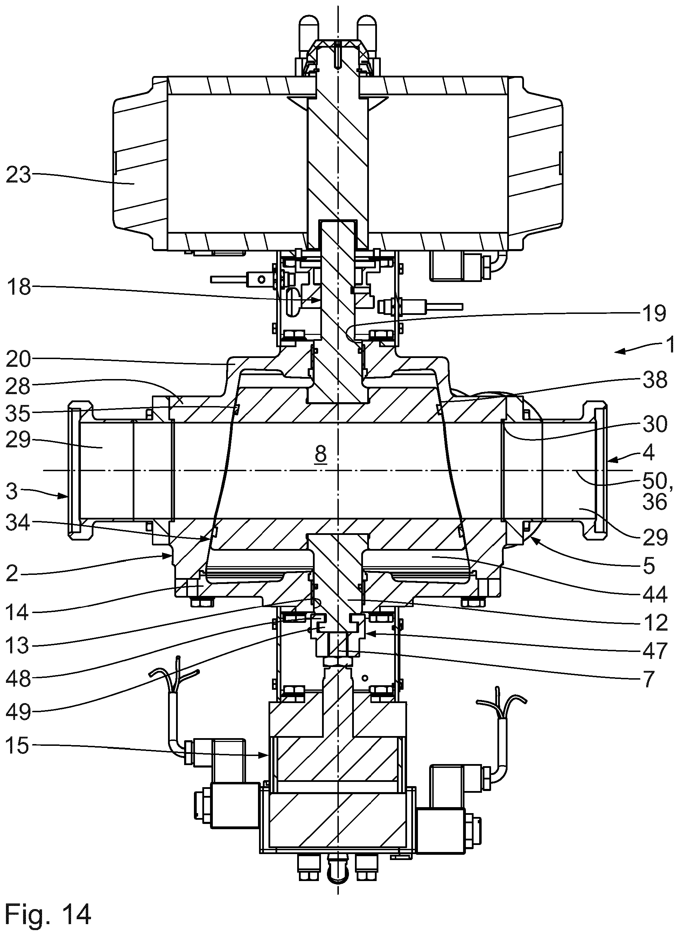

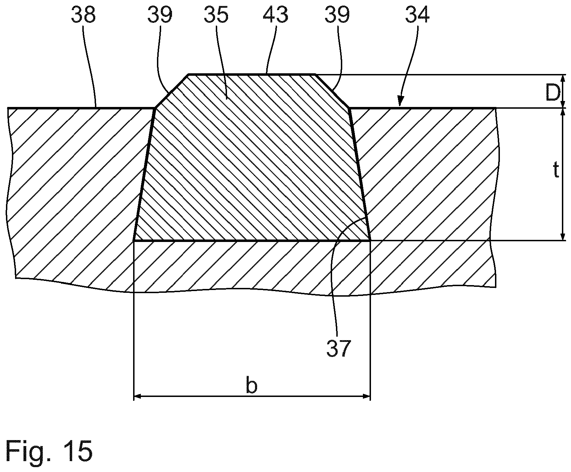

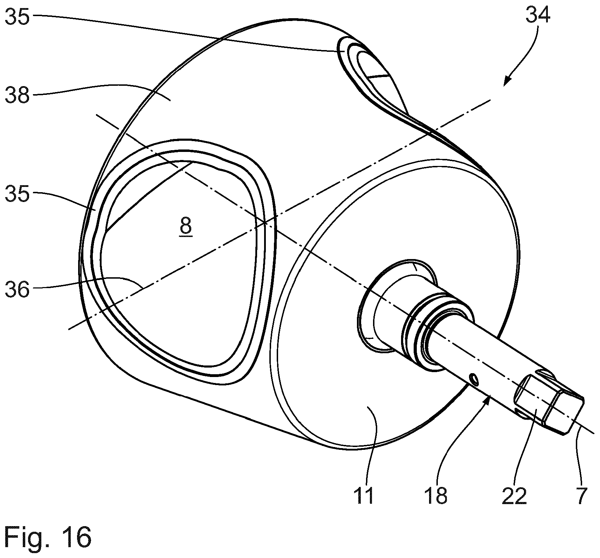

Nachfolgend werden anhand der Fig. 14 bis 16 Aufbau und Funktion der Weiche 1 mit einer Dichtung am Durchgangskanal 8 näher erläutert.

Bei dieser weiteren Ausführungsform der Weiche 1weisen an dem Drehteil 34 die im Wesentlichen ringförmigen Öffnungen des Durchgangskanals 8 jeweils ein umlaufendes Durchgangskanal-Dichtungselement 35 auf. Bezüglich der Durchgangskanal-Längsachse 36 sind die Durchgangskanal-Dichtungselemente 35 umlaufend an der Außenkontur 9 des Drehteils 34 angeordnet. Die Anordnung und insbesondere die Positionierung des Drehteils 34 in dem Gehäuse 2 sind im Übrigen im Wesentlichen unverändert. Ein wesentlicher Unterschied gegenüber der vorherigen Ausführungsform besteht darin, dass der Dichtspalt zwischen der Außenkontur 9 des Drehteils 34 und der Innenkontur 17 des Gehäuses 2 vergrößert ist. Der Radialspalt beträgt insbesondere zwischen 0,1 mm und 2,0 mm, insbesondere zwischen 0,2 mm und 2,0 mm, insbesondere zwischen 0,3 mm und 1,2 mm und insbesondere zwischen 0,4 mm und 0,8 mm. Um das Drehen des Drehteils 34 sicherzustellen, kann das Drehteil 34 axial entlang der Längsachse 7 aus dem Gehäuse 2 zumindest bereichsweise gezogen werden. Bevorzugt ist es, wenn das Drehteil 34 in der Förderstellung in dem Gehäuse 2 gedreht wird.

Wie bei der vorherigen Ausführungsform der Spaltdichtung ist das Drehteil 34 mit den Durchgangskanal-Dichtungselementen 35 in dem Gehäuse 2 drehbar angeordnet. Für eine Drehbarkeit des Drehteils 34 um die Drehachse 7 ist es nicht erforderlich, das Drehteil 34 in dem Gehäuse 2 axial zu verlagern.

Besonders an der Ausführung des Durchgangskanal-Dichtungselements 35 ist, dass die umlaufende Dichtungsnut 37 im Wesentlichen schwalbenschwanzförmig oder trapezförmig ausgeführt ist, also die Nutbreite b mit steigender Nuttiefe t zunimmt. Die schwalbenschwanzförmige oder trapezförmige Kontur kann in den Eckenbereichen abgerundet sein. Es ist insbesondere denkbar, dass nur einzelne oder sämtliche Eckenbereiche abgerundet sind. Der Flankenwinkel der schwalbenschwanzförmigen oder trapezförmigen Kontur ist insbesondere größer als 45°, insbesondere größer als 60°, insbesondere größer als 75°, insbesondere größer als 80°, insbesondere größer als 85° und insbesondere größer als 88°. In jedem Fall ist der Flankenwinkel kleiner als 90°. Ein Flankenwinkel von 90° würde eine Rechteckkontur der Dichtungsnut 37 bedeuten.

In Tiefenrichtung wächst die Nutbreite b zumindest in einer Breitenrichtung. Dadurch wird das Durchgangskanal-Dichtungselement 35 zuverlässig in der Nut 37 gehalten. Insbesondere ist die Nutbreite im Bereich der Oberfläche 38 des Drehteils 34 kleiner als die Breite des Durchgangskanal-Dichtungselements 35 in einem Ausgangszustand. Das Durchgangskanal-Dichtungselement 35 ist in der Nut 37 an der Oberfläche 38 vorgespannt und in Nutbreitenrichtung geklemmt angeordnet.

Um den Halt des Durchgangskanal-Dichtungselements 35 in der Nut 37 zu verbessern, kann die Breite des Durchgangskanal-Dichtungselements mit zunehmender Nuttiefe t ebenfalls zunehmen. Die Kontur des Abschnitts des Durchgangskanal-Dichtungselements 35, der innerhalb der Nut 37 angeordnet ist, ist im Wesentlichen ebenfalls schwalbenschwanzförmig ausgeführt, wobei zumindest insbesondere in einer Richtung die Breite zunimmt. Insbesondere ist die Kontur des in der Nut 37 angeordneten Abschnitts des Durchgangskanal-Dichtungselements 35 im Wesentlichen identisch zu dem Nutquerschnitt ausgeführt. Die maximale Breite des Durchgangskanal-Dichtungselements 35 ist insbesondere größer als die der Oberfläche 38 des Drehteils 34 zugewandte Öffnung der Nut 37. Das Durchgangskanal-Dichtungselement 35 füllt die Nut 37 insbesondere vollständig aus. Das Durchgangskanal-Dichtungselement 35 ist spaltfrei und totraumfrei in der Nut 37 angeordnet. Die gesamte Oberfläche der Nut 37 ist durch das Durchgangskanal-Dichtungselement 35 abgedeckt. Das Durchgangskanal-Dichtungselement 35 liegt vollflächig an der Innenfläche der Nut 37 an. Das Durchgangskanal-Dichtungselement 35 ist aus einem Elastomermaterial hergestellt.

Das Durchgangskanal-Dichtungselement 35 ragt gemäß dem gezeigten Ausführungsbeispiel an der Oberfläche 38 des Drehteils 34 aus der Nut 37 hervor. Dadurch ist eine Dichtwirkung des Durchgangskanal-Dichtungselements 35 verbessert. Der Überstand D gegenüber der Oberfläche 38 beträgt gemäß dem gezeigten Ausführungsbeispiel insbesondere zwischen 0,5 mm und 1,0 mm. Die Querschnittsform des Durchgangskanal-Dichtungselements 35 ist im Wesentlichen rechteckförmig, wobei der Überstandsabschnitt des Durchgangskanal-Dichtungselements 35, der aus der Nut 37 vorragt, seitliche Übergangsfasen 39 aufweist. Die Übergangsfasen 39 verbessern die Dichtwirkung am Drehteil 34. Die Übergangsfasen 39 ermöglichen einen stetigen Übergang von der Oberfläche 38 des Drehteils 34 zu der Oberfläche 43 des Durchgangskanal-Dichtungselements 35.

Um die Weiche 1 mit Durchgangskanal-Dichtungselementen 35 zu spülen, wird das Drehteil 34 wie bei der vorherigen Ausführungsform dem Gehäuse 2 axial verlagert, bis der Spülspalt vorliegt. Da die Durchgangskanal-Dichtungselemente 35 an der Außenkontur 9 des Drehteils 34 überstehen, ist bei dieser Ausführungsform der Spülspalt als Abstand zwischen der Innenkontur 17 des Gehäuses 2 und den Durchgangskanal-Dichtungselementen 35 festgelegt. Der so definierte Spülspalt ist für diese Ausführungsform identisch mit dem Spülspalt der Weiche 1 mit Spaltdichtung.

Über die Ablauföffnung 24 kann das Spülwasser aus dem Gehäuse 2 der Weiche 1 entweichen.

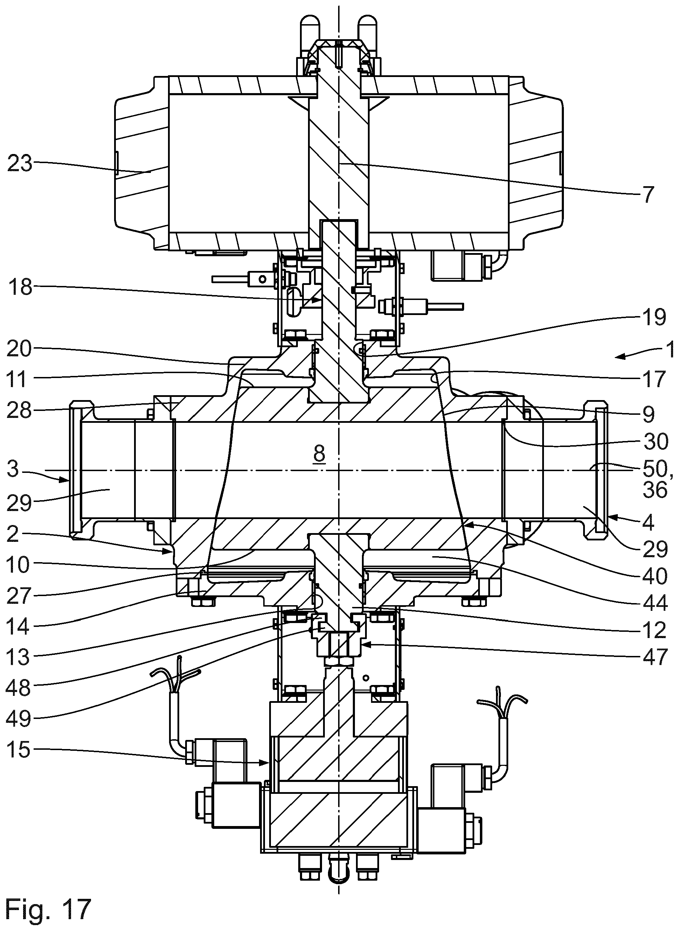

Nachfolgend werden anhand von Fig. 17 Aufbau und Funktion einer weiteren Ausführungsform einer Weiche ohne Radialspalt erläutert.

Bei dieser Ausführungsform der Weiche 1 ist das Drehteil 40 ohne Dichtungselement gemäß dem gezeigten Ausführungsbeispiel ausgeführt. Eine Abdichtung des Drehteils 40 im Gehäuse 2 wird dadurch erreicht, dass das Drehteil 40 mit der konischen Außenkontur 9 unmittelbar an der konischen Innenkontur 17 des Gehäuses 2 anliegt. Man spricht davon, dass das Drehteil 40 gegenüber dem Gehäuse 2 auf Block gesetzt ist. In dieser Anordnung ist kein Radialspalt vorgesehen bzw. der Radialspalt beträgt 0 mm. Für diese Ausführungsform ist es vorteilhaft, wenn zumindest eine der aneinander anliegenden Oberflächen eine bestimmte Oberflächenbehandlung aufweist und insbesondere eine Oberflächenveredelung aufweist, insbesondere eine besondere Oberflächenhärte aufweist. Es ist auch möglich, die Oberflächen beider Komponenten, also des Gehäuses 2 und des Drehteils 40 mit einer härtenden Schicht zu versehen. Vorteilhaft ist es, wenn die Oberflächen eine Chromschicht als Härteschicht aufweisen. Vorteilhaft ist es, wenn nur die Oberfläche des Drehteils 40 mit der Chromschicht ausgeführt ist.

Es ist denkbar, zusätzlich zu der Anordnung auf Block an der Außenkontur des Drehteils 40 ein Konus-Dichtungselement 16 in Form eines O-Rings vorzusehen.

Zum Drehen der Weiche, bei der das Drehteil 40 in dem Gehäuse auf Block gesetzt ist, ist es erforderlich, das Drehteil 40 von dem Gehäuse 2 zu entfernen. Dies kann beispielsweise durch eine vergleichsweise geringe Axialverstellung von wenigen zehntel Millimetern bis zu einigen Millimetern erfolgen. Die geringe Axialverstellung des Drehteils 40 kann dadurch erfolgen, dass der pneumatische Hubantrieb, also der Axialantrieb 15, drucklos geschaltet wird. Mittels einer nicht dargestellten Tellerfeder, die vorgespannt eingebaut ist, wird das Drehteil 40 von der Konus-Innenkontur 17 des Gehäuses 2 abgehoben.

In der abgehobenen Anordnung des Drehteils 40 kann dieses beispielsweise zwischen der Durchgangsanordnung und der Abgangsanordnung gedreht werden.

In dieser Anordnung kann das Drehteil 40 aber auch um die Drehachse 7 gedreht werden, um mögliche Produktablagerungen abzukratzen und auszutragen. Für das eigentliche Spülen wird das Drehteil 40 weiter entlang der Drehachse 7 aus dem Gehäuse 2 herausgezogen, bis ein größerer, definierter Spülspalt gebildet ist.

Eine weitere Axialverstellung erfolgt durch den Axialantrieb 15, in dem dieser aktiviert, also betätigt, wird.

Anstelle der vorgespannten Tellerfeder ist es auch möglich, zwei hintereinander geschaltete Pneumatikzylinder als Axialantrieb 15 einzusetzen.

Das Axialverlagern des Drehteils 40 kann auch einstufig erfolgen, wobei insbesondere auf ein Entlastungselement bei Drucklosschalten des Axialantriebs 15 verzichtet wird. Das Drehen und Reinigen des Drehteils 40 erfolgt dann in einem maximal axial verlagerten Zustand, also in der Spülanordnung.

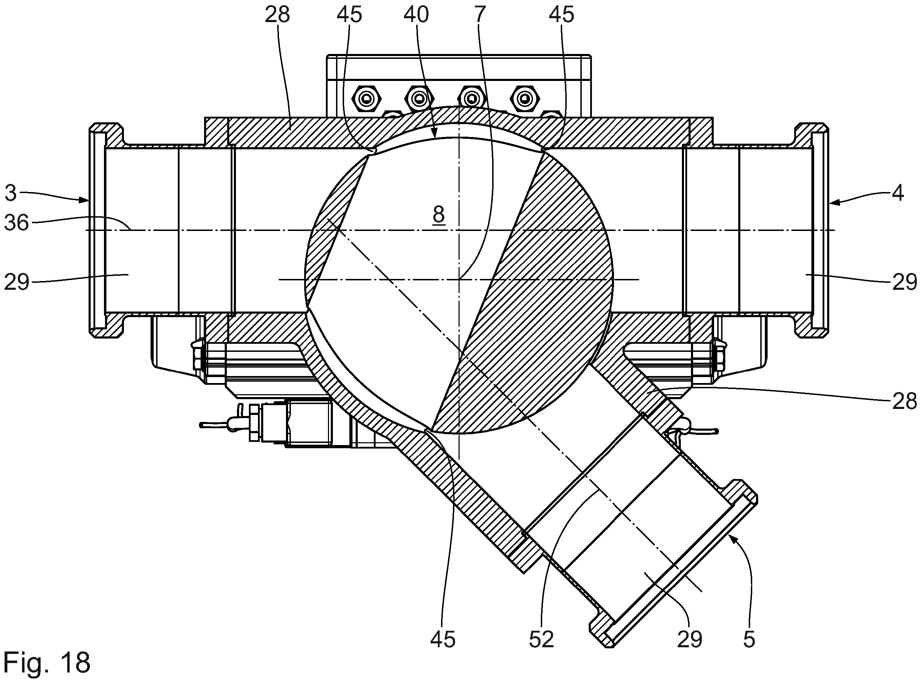

Nachfolgend wird anhand von Fig. 18 die Funktion, insbesondere das Spülen einer Weiche näher erläutert. Gemäß Fig. 18 befindet sich das Drehteil 40 in dem axialverlagerten Zustand. Zusätzlich ist das Drehteil 40 um die Längsachse 7 gedreht, befindet sich also weder in der Durchgangsanordnung noch in der Abgangsanordnung, sondern in einer Spül-Drehposition, in der der Durchgangskanal 8 keiner der Durchgangsöffnungen 3, 4, 5 zugewandt ist. Insbesondere ist die erste Durchgangsöffnung 3 und der damit verbundene Rohrleitungsabschnitt durch das Drehteil 40 weitgehend blockiert. Spülwasser, das aufgrund der Spalte in den Seitendeckelbereich gedrückt wird, durchströmt diesen Seitendeckelbereich intensiv. Das Spülwasser wird anschließend durch weitere Spalte in eine der abführenden Rohrleitungsabschnitte gespült, die mit den Durchgangsöffnungen 4 und/oder 5 verbunden sind. Vorteilhaft ist es, dass der Drehantrieb 23 der Weiche 1 die Spülposition des Drehteils 40 mit einer dritten Mittelposition ermöglicht.

Zusätzlich kann an der Ablauföffnung 24 Reinigungsflüssigkeit austreten, um den Seitenbereich zwischen dem Gehäuse 2 und dem Drehteil 6, bzw. zwischen dem Deckel 14 und dem Drehteil 6 besser zu spülen.

Am Ende des Reinigungsvorgangs wird durch die Ablauföffnung 24 das Spülwasser abgeführt.

Zum Trocknen der Weiche, insbesondere des Drehteils 40, kann der Drehantrieb 23 in die in Fig. 18 gezeigte Mittelposition gefahren werden. Um den Trocknungsvorgang zu beschleunigen, kann das Drehteil ebenfalls axial bewegt werden, damit genügend Turbulenz der Strömung erzeugt wird, und insbesondere um alle Bereiche der Weiche 1 und der des Drehteils 40 sicher abzutrocknen und größere Mengen des Spülwassers aus möglichen Totzonen zu entfernen.

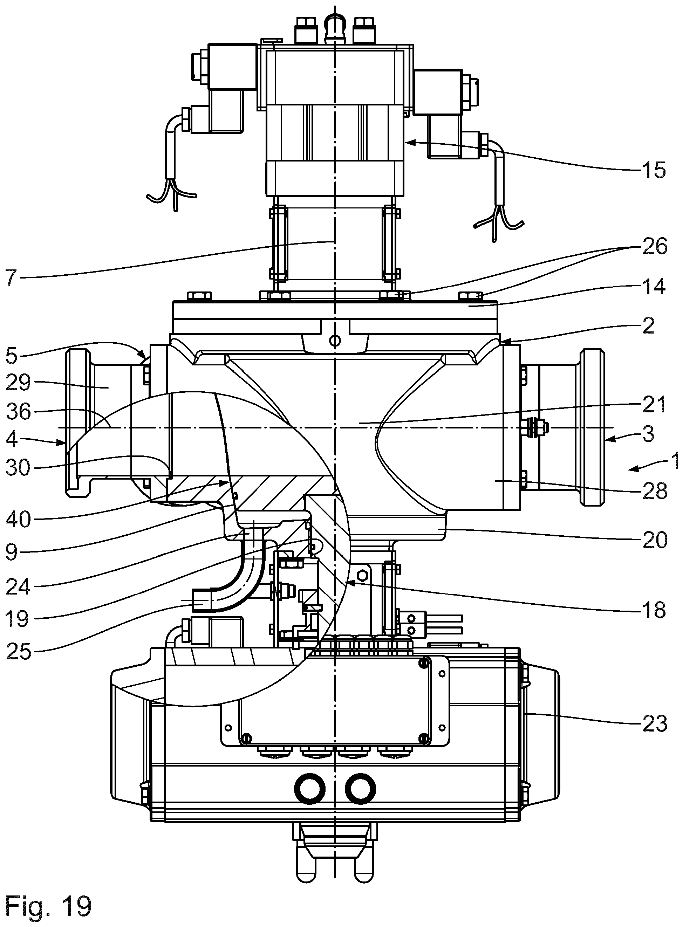

Im Folgenden werden anhand von Fig. 19 Aufbau und Funktion einer weiteren Ausführungsform einer Weiche erläutert, bei der die Ablauföffnung 24 am Gehäuseboden 20 angeordnet ist. Diese Weiche 1 kann in einer Einbaulage verwendet werden, in der der Gehäusedeckel 14 horizontal ausgeführt und an einer Oberseite des Gehäuses 2 angeordnet ist. In dieser Anordnung bildet der Gehäuseboden 20 und insbesondere die radial an einer Außenseite angeordnete Ablauföffnung 24 den tiefsten Punkt des Gehäuses 2, so dass Reinigungsflüssigkeit, wie vorstehend erläutert, selbsttätig infolge der Schwerkraft aus dem Gehäuse 2 ablaufen kann, ohne dass eine Öffnung des Gehäuses 2 erforderlich ist.

Wie in Fig. 19 gezeigt, ist der Gehäuseboden 20 zu der Ablauföffnung 24 hin geneigt ausgeführt. Die Ablauföffnung 24 hat bezüglich der Drehachse 7 einen Radialabstand derart, dass die Ablauföffnung im Bereich des Außenumfangs des Gehäusebodens 20 angeordnet ist. Es ist auch denkbar, die Ablauföffnung 24 mit geringerem Radialabstand am Gehäuseboden 20 anzuordnen.

Es ist denkbar, dass der Gehäuseboden 20 plan ausgeführt ist. Es ist denkbar, dass in dem Gehäuseboden 20 eine Ablaufrinne integriert ist, die gemäß der Schnittansicht in Fig. 19 im Wesentlichen v- oder u-förmig ausgeführt ist und mit einem Gefälle zur Ablauföffnung 24 hin ausgeführt ist. Dadurch kann Spülflüssigkeit gezielt und zuverlässig zu der Ablauföffnung 24 hin abgeleitet werden. Die Form des Gehäusebodens 20 hängt insbesondere von der Einbaulage der Weiche 1 ab.

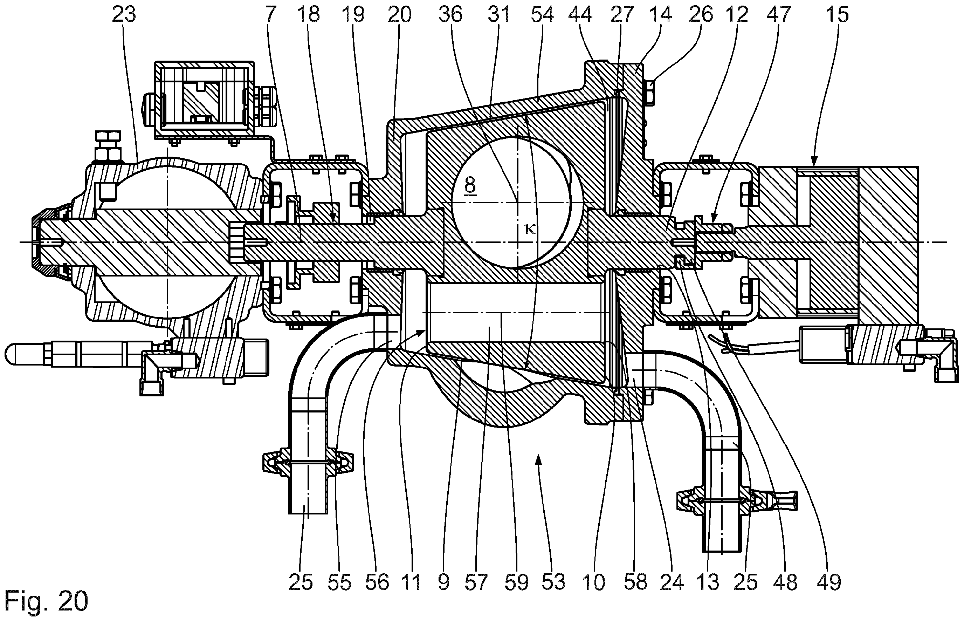

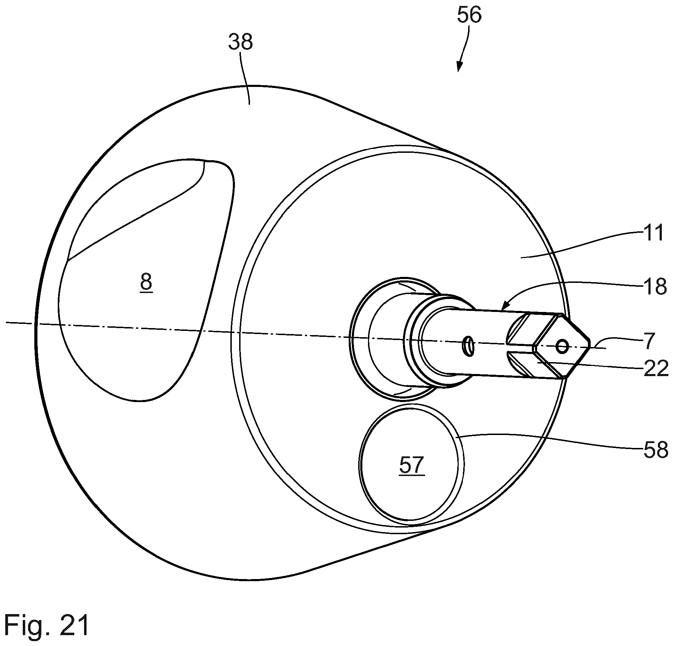

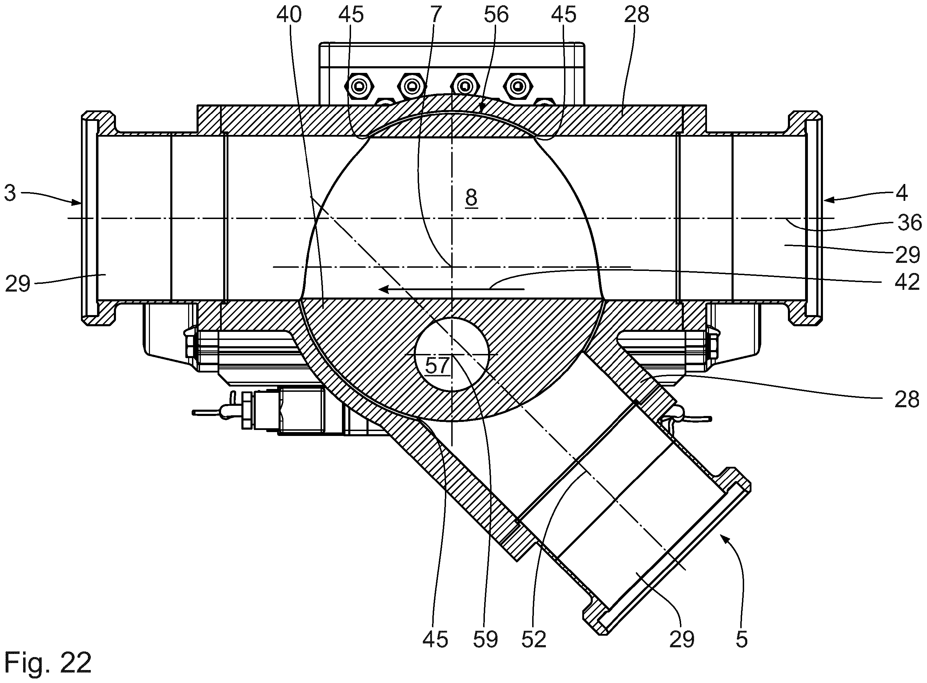

Nachfolgend wird anhand von Fig. 20 bis 22 eine weitere Ausführungsform einer Weiche erläutert.

Die Weiche 53 unterscheidet sich von den vorherigen Weichen dadurch, dass an dem Gehäuse 54 eine zweite Ablauföffnung 55 und an dem Drehteil 40 ein Durchbruch 57 vorgesehen sind. Die Weiche 53 kann auch mit nur einer Ablauföffnung 24 und Durchbruch 57 in dem Drehteil 40 aufgeführt sein. Die Weiche 53 kann auch mit den beiden Ablauföffnungen 24, 55, aber ohne Durchbruch 57 ausgeführt sein. Das Vorsehen der zweiten Ablauföffnung 57 ist unabhängig davon möglich, ob an dem Drehteil 40 der Durchbruch 57 vorgesehen ist.

Die zweite Ablauföffnung 55 ist stirnseitig an dem Gehäuse 54 angeordnet. Die zweite Ablauföffnung 55 ist im Gehäuseboden 20 angeordnet. Die erste Ablauföffnung 24 ist am Gehäusedeckel 14 angeordnet, insbesondere in einem radialen Außenbereich des Gehäusedeckels 14. Die erste Ablauföffnung 24 ist an einer tiefsten Stelle des Gehäuses angeordnet.

Das Drehteil 56 entspricht im Wesentlichen dem Drehteil 40 gemäß der vorherigen Ausführungsform, wobei zusätzlich ein Durchbruch 57 vorgesehen ist. Der Durchbruch 57 ist im Wesentlichen zylinderförmig ausgeführt und weist an den den Stirnflächen 10, 11 des Drehteils 56 zugewandten Übergängen Abfasungen 58 auf. Der Durchbruch 57 weist eine Durchbruch-Längsachse 59 auf, die parallel zu Längsachse 7 der Weiche 53 orientiert ist. Der Durchbruch 57 führt zu einer Reduzierung der Masse des Drehteils. Zudem ist die Spülung der Weiche 53, insbesondere im Bereich der Seitenflächen verbessert. Wesentlich ist, dass sich der Durchbruch 57 von zumindest einer der Stirnseiten 10, 11 des Drehteils 56 aus erstreckt. Es ist auch denkbar, anstelle des Durchbruchs eine sacklochartige Ausnehmung vorzusehen, die sich entlang der Durchbruchlängsachse 59 erstreckt, aber nicht durchgängig durch das Drehteil 56 ausgeführt ist.

Die Durchbruchlängsachse 59 kann gegenüber der Längsachse 7 mit einem Neigungswinkel angeordnet sein. Dieser Neigungswinkel kann bis zu 20° betragen.

Die Durchbruchlängsachse 59 ist insbesondere senkrecht zur Durchgangskanal-Längsachse 36 orientiert. Die Durchgangskanal-Längsachse 36 und die Durchbruchlängsachse 59 sind derart windschief zueinander orientiert, dass der Durchgangskanal 8 und der Durchbruch 57 voneinander getrennt in dem Drehteil 56 verlaufen. Der Durchbruch 57 ist beabstandet von dem Durchgangskanal 8 im Drehteil 56 integriert. Der Durchgangskanal 8 und der Durchbruch 57 sind nicht miteinander verbunden. Der Durchbruch 57 ist eine Entlastungsbohrung.

Während des Reinigens der Weiche 53 mit einer Flüssigkeit ermöglicht der Durchbruch 57 eine Verbesserung des Reinigungsergebnisses. Sobald Flüssigkeit, insbesondere Wasser über eine der seitlichen Ablauföffnungen des Durchbruchs 57 austritt, werden die Stirnseiten des Drehteils 56 besser umspült.

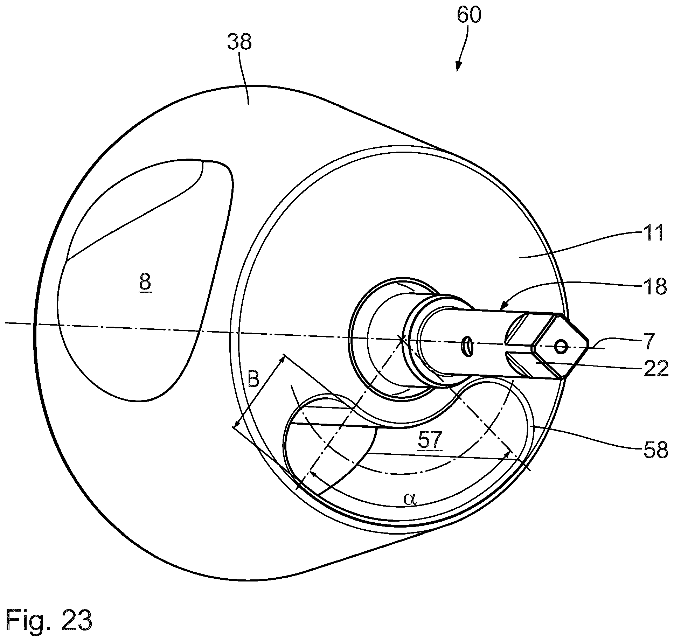

Nachfolgend wird anhand von Fig. 23 eine weitere Ausführungsform eines Drehteils 60 erläutert. Das Drehteil 60 entspricht im Wesentlichen dem Drehteil 56, wobei der Durchbruch 57 langlochförmig entlang eines Kreisbogens ausgeführt ist. Der Öffnungswinkel α des Kreisbogens bezüglich der Längsachse 7 beträgt gemäß dem gezeigten Ausführungsbeispiel 90°. Der Öffnungswinkel α kann auch mehr als 90° oder weniger als 90° betragen. Die Langlochbreite B beträgt dem gezeigten Ausführungsbeispiel die Hälfte des Radius der kleineren Stirnfläche 11. Die Langlochbreite B kann größer oder kleiner gewählt werden. Vorteilhaft ist es, wenn der Durchbruch 57 möglichst groß ist, um möglichst viel Masse des Drehteils 60 zu reduzieren. Bei der Ausgestaltung des Durchbruchs 57 ist zu berücksichtigen, dass sich der Durchbruch 57 und der Durchgangskanal 8 nicht schneiden. Die Stabilität und Steifigkeit des Drehteils 60 ist trotz des Durchbruchs 57 gewährleistet.

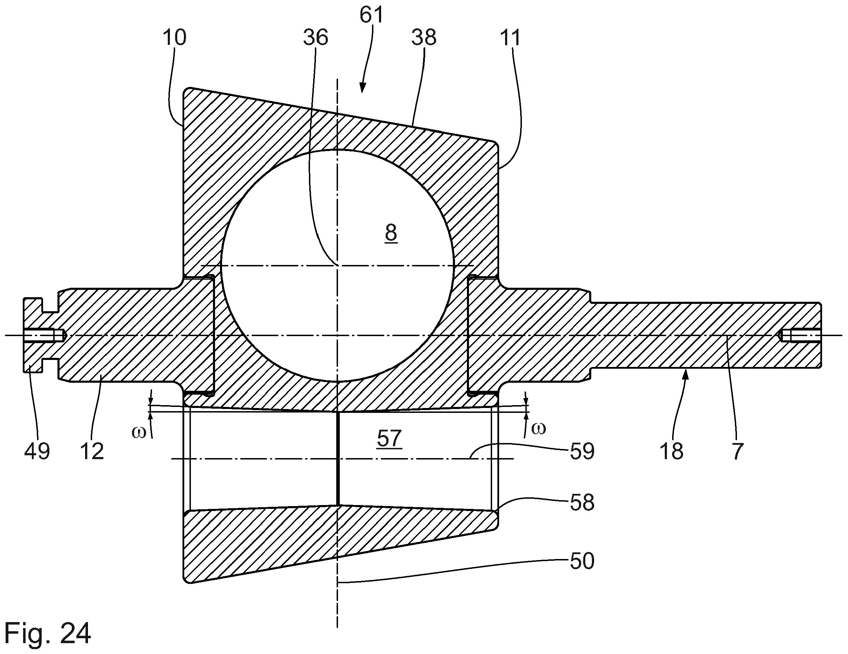

Nachfolgend wird anhand von Fig. 24 eine weitere Ausführungsform eines Drehteils 61 erläutert.

Das Drehteil 61 entspricht im Wesentlichen dem Drehteil 56 gemäß dem vorherigen Ausführungsbeispiel. Der wesentliche Unterschied besteht darin, dass der Durchbruch 57 doppeltkonisch ausgeführt ist. Jeweils ausgehend von den an den Stirnflächen 10, 11 angeordneten Öffnungen verjüngt sich der Durchbruch 57 mit einem Durchbruch-Konuswinkel ω. Gemäß dem gezeigten Ausführungsbeispiel beträgt der Durchbruch-Konuswinkel ω 1°. Der Durchbruch-Konuswinkel ω kann aber auch größer oder kleiner als 1° gewählt werden. Vorteilhaft ist es, wenn der Durchbruch-Konuswinkel ω im Durchbruch 57 ein selbsttätiges Ablaufen von Reinigungsflüssigkeit aus dem Durchbruch zu den Stirnflächen 10, 11 hin begünstigt.

Die doppeltkonische Ausführung des Durchbruchs 57 ist symmetrisch. Das bedeutet, dass sich die Konusabschnitte des Durchbruchs 57 in der Längsmittenebene 50 treffen, in der auch die Durchgangskanal-Längsachse 36 liegt. Insbesondere sind die beiden Durchbruch-Konuswinkel ω der Konusabschnitte des Durchbruchs 57 identisch. Es ist auch denkbar, dass die Tiefe der Konusabschnitte des Durchbruchs 57 voneinander verschieden sind und sich insbesondere außerhalb der Längsmittenebene 50 treffen. Die Durchbruch-Konuswinkel ω können auch unterschiedlich festgelegt sein.

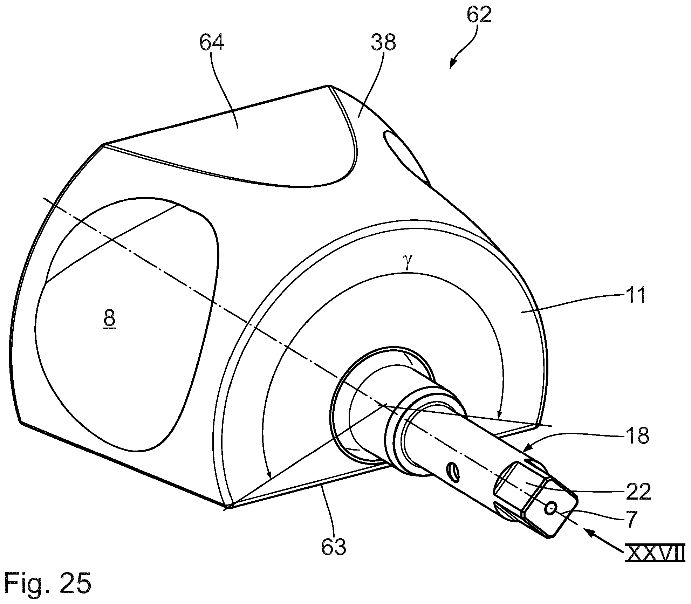

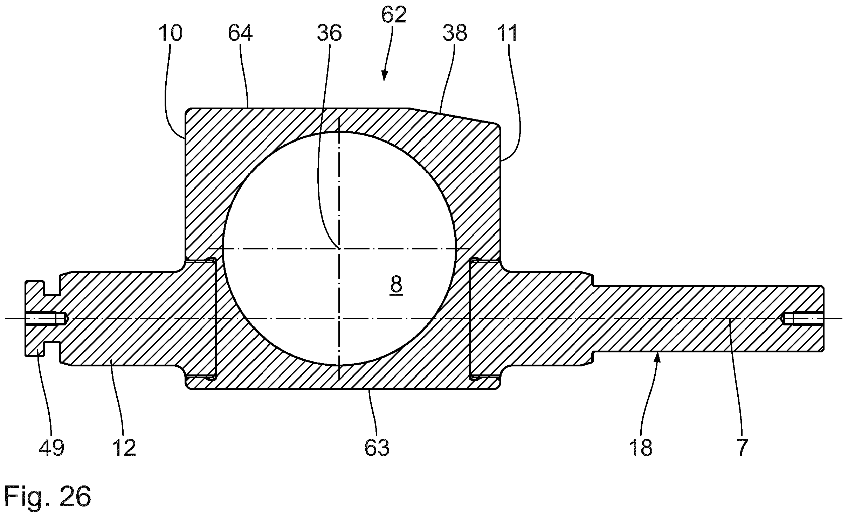

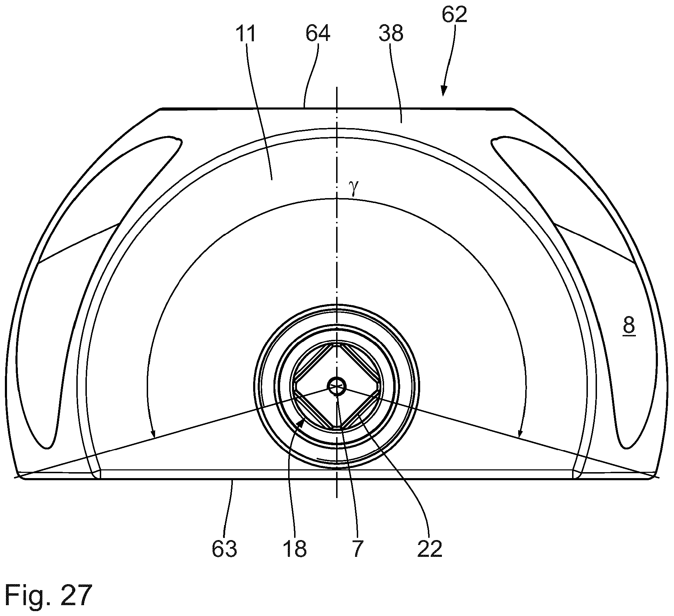

Nachfolgend wird anhand von Fig. 25 bis 27 eine weitere Ausführungsform eines Drehteils 62 erläutert. Der wesentliche Unterschied gegenüber den vorherigen Ausführungsformen besteht darin, dass die Außenkontur 9 des Drehteils 62 nicht vollumfänglich konisch ausgeführt ist. Die Außenkontur erstreckt sich über einen Öffnungswinkel γ bezüglich der Längsachse 7, wobei der Öffnungswinkel γ mehr als 180° beträgt. Gemäß dem gezeigten Ausführungsbeispiel beträgt der Öffnungswinkel γ 200°.

Das Drehteil 62 entspricht einem Segment eines Konus. Die in Fig. 25 nicht sichtbare Außenseite 63 des Drehteils 62 ist plan ausgeführt. Die der Außenseite 63 gegenüberliegende Fläche ist bereichsweise begradigt. Der begradigte Abschnitt 64 ist parallel zur Außenseite 63 ausgeführt.

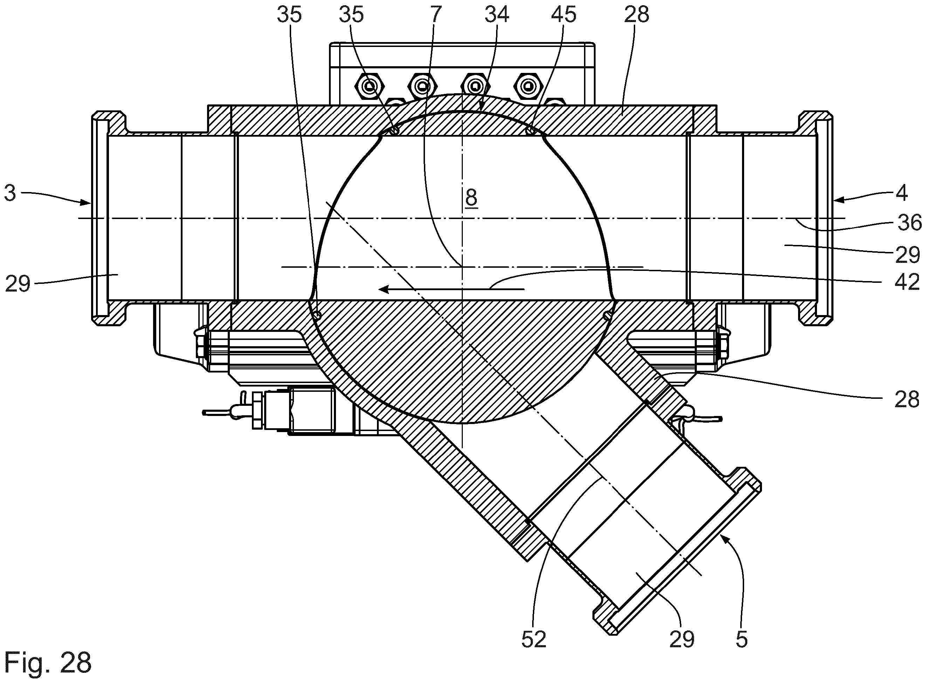

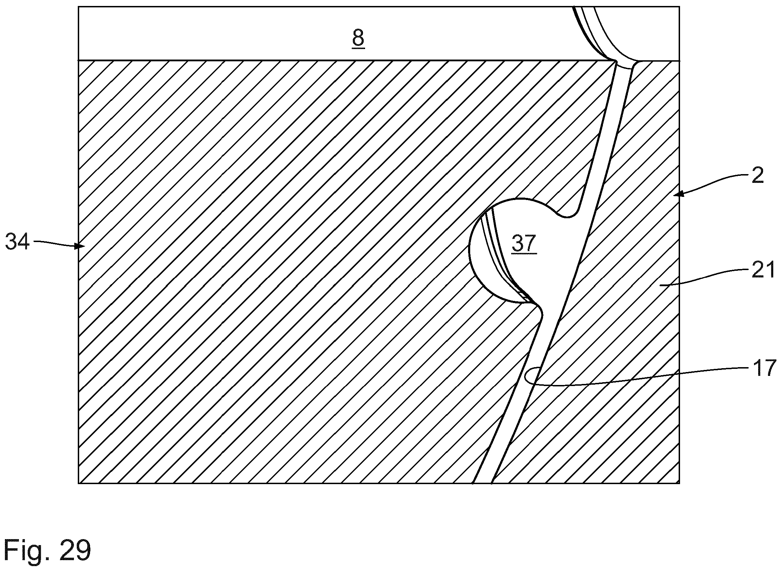

Nachfolgend wird anhand von Fig. 28 bis 30 eine weitere Ausführungsform einer Weiche erläutert.

Bei der Weiche 1 ist das Durchgangskanal-Dichtungselement 35 im Wesentlichen als O-Ring ausgeführt, der in einer korrespondierenden Dichtungsnut 37 angeordnet ist. Die Querschnittsform des Durchgangskanal-Dichtungselements 35 und die Kontur der Dichtungsnut 37 korrespondieren zueinander, sodass die Dichtungsnut 37 durch das Durchgangskanal-Dichtungselement 35 vollständig ausgefüllt ist. Toträume sind vermieden.

Das Durchgangskanal-Dichtungselement 35 weist einen Überstandsabschnitt auf, der zwei Übergangsfasen 39 umfasst, die sich in einer im Wesentlichen linienförmigen Oberfläche 43 treffen. Die linienförmige Oberfläche 43 bildet eine Kontaktkante des Durchgangskanal-Dichtungselements 35 an der Innenkontur 17 des Gehäuses 2.

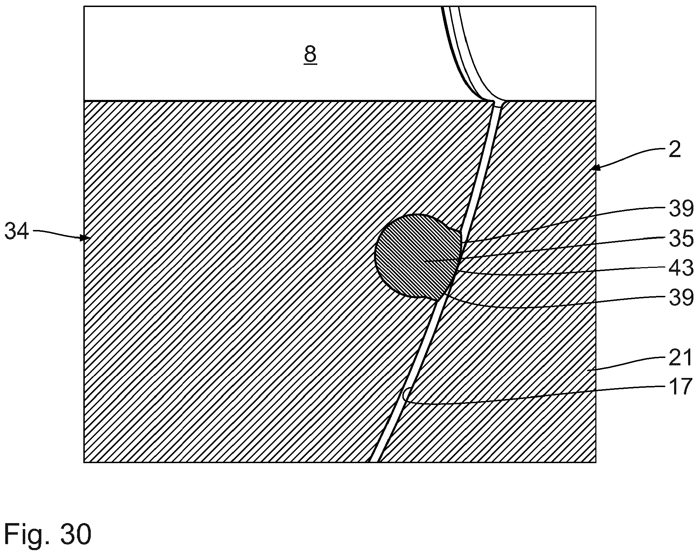

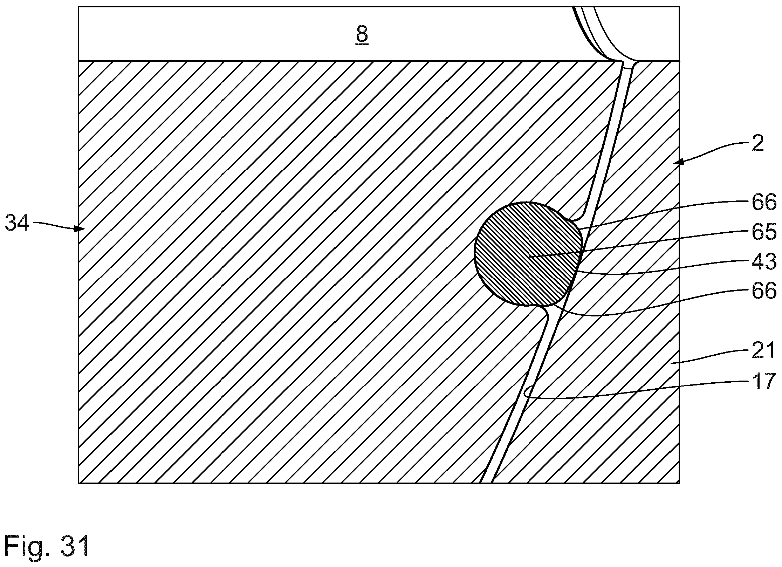

Nachfolgend wird anhand von Fig. 31 eine weitere Ausführungsform des Durchgangskanal-Dichtungselements erläutert. Das Durchgangskanal-Dichtungselement 65 ist wie die Ausführungsform gemäß Fig. 30 im Wesentlichen O-ringförmig ausgeführt. Der einzige Unterschied besteht darin, dass der Überstandsabschnitt anstelle der Überstandsfasen Überstandsabrundungen 66 aufweist, die einen Übergang in eine im Wesentlichen eben ausgeführte Oberfläche 43 zeigen. Die Kontaktfläche im Bereich der Oberfläche 43 von dem Durchgangskanal-Dichtungselement 65 mit der Innenkontur 17 des Gehäuses 2 ist dadurch vergrößert.

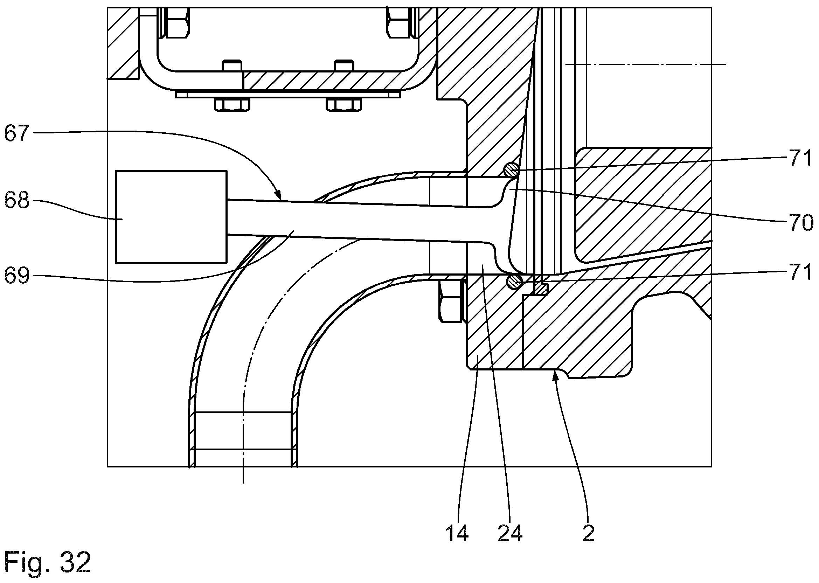

Nachfolgend wird anhand von Fig. 32 eine weitere Ausführungsform einer Weiche erläutert.

Die Weiche, die in Fig. 32 ausschnittsweise gezeigt ist, weist ein Ventil mit einem Ventilkörper 67 auf, der in Form eines Zylinderkopfventils ausgeführt ist. Mit dem Ventil kann die Ablauföffnung 24 zeitweise geöffnet und geschlossen werden. Der Abfluss von Flüssigkeit, insbesondere von Reinigungsflüssigkeit durch die Ablauföffnung 24 kann mittels des Ventils gesteuert werden. Zum Trocknen des Innenraums der Weiche 1 kann das Ventil geöffnet werden, insbesondere um die Luftzufuhr zu verbessern und insbesondere in dem Bereich benachbart der Ablauföffnung 24 das Trocknungsverhalten zu verbessern.

Der Ventilkörper 67 ist an der Ablauföffnung 24 angeordnet.

Der Ventilkörper 67 schließt bündig mit der Innenkontur des Gehäuses, insbesondere mit der Innenkontur des Gehäusedeckels 14 ab. Ein Totraum, in dem sich Produkt- und/oder Reinigungsflüssigkeit, insbesondere aus dem Reinigungszyklus, sammeln kann, ist vermieden. Es ist gewährleistet, dass der Innenraum des Gehäuses 2 rückstandslos gereinigt wird. Rückstände im Gehäuse 2 der Weiche 1 sind vermieden.

Der Ventilkörper 67 ist mittels eines Ventilkörperstellantriebs 68 zwischen der in Fig. 32 gezeigten Schließanordnung und einer Öffnungsanordnung verlagerbar. Die Verlagerungsrichtung für den Ventilkörper 67 ist quer und insbesondere senkrecht zum Gehäusedeckel 14 in das Gehäuse 2 hinein orientiert. Insbesondere ist die Verlagerungsrichtung für den Ventilkörper 67 senkrecht zu der Ebene der Ablauföffnung 24 orientiert. Durch die Verlagerung des Ventilkörpers 67 wird die Ablauföffnung freigegeben.

Der Ventilkörper 67 ist mit einer Ventilstange 69 und einem stirnseitig daran angeordneten Ventilteller 70 ausgeführt. Der Ventilteller 70 ist einteilig mit der Ventilstange 69 verbunden. Der Ventilteller 70 ist in der Schließanordnung gemäß Fig. 32 abgedichtet an der Ablauföffnung 24 angeordnet. Zum Abdichten des Ventilkörpers 67 dient gemäß dem gezeigten Ausführungsbeispiel eine Ventilkörper-Dichtung 71, die gemäß dem gezeigten Ausführungsbeispiel als O-Ring an der Ablauföffnung 24 im Gehäusedeckel 14 integriert ausgeführt ist. Die Ventilkörper-Dichtung 71 ist gehäusefest angeordnet. Die Ventilkörper-Dichtung 71 ist produktberührend ausgeführt.

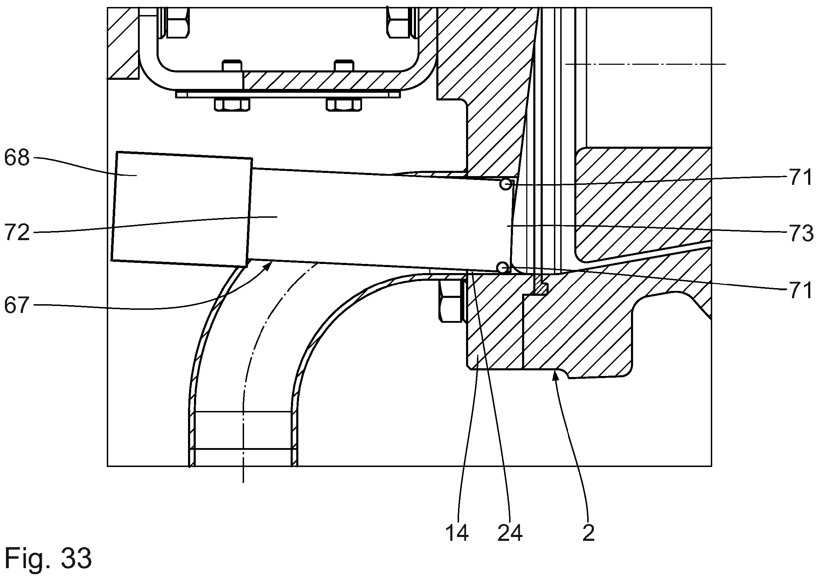

Nachfolgend wird anhand von Fig. 33 eine weitere Ausführungsform einer Weiche 1 beschrieben. Bei der Ausführungsform ist der Ventilkörper 67 als schräg ausgerichteter Stempel ausgeführt. Die Verlagerungsrichtung für den Ventilkörper 67 ist quer zur Längsachse 7 der Weiche orientiert. Bei dem Ventilkörper 67 weist der Stempel 72 entlang der Verlagerungsrichtung eine im Wesentlichen konstante Dicke, insbesondere eine konstante Querschnittsfläche auf.

Die Ventilkörper-Dichtung 71 ist im Bereich der Stirnseite 73 des Stempels 72 angeordnet. Die Stirnseite 73 ist dem Innenraum des Gehäuses 2 der Weiche 1 zugewandt. Die Ventilkörper-Dichtung 71 ist insbesondere an dem Stempel 72 angeordnet. Mit einer Verlagerung des Stempels 72 zum Verschließen und Öffnen der Ablauföffnung 24 wird auch die Ventilkörper-Dichtung 71 verlagert. Die Ventilkörper-Dichtung 71 ist nicht gehäusefest, sondern ventilkörperfest angebracht.

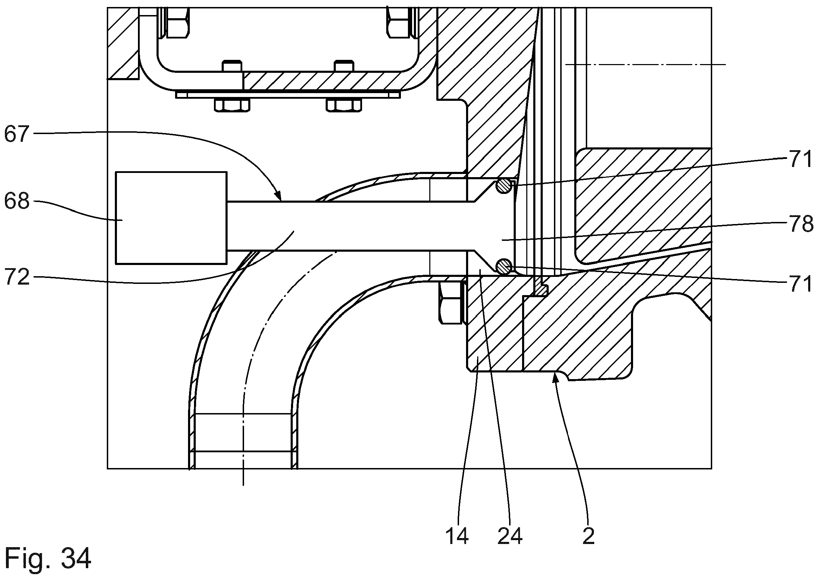

Im Folgenden wird anhand von Fig. 34 eine weitere Ausführungsform einer Weiche mit Ventilkörper erläutert. Der Ventilkörper 67 entspricht einem Stempel 72 mit konisch angeformtem Kopf 78. Die Konizität des Kopfes 78 entspricht der Konizität der Ablauföffnung 24 im Gehäusedeckel 14. Wie in dem vorherigen Ausführungsbeispiel ist die Ventilkörper-Dichtung 71 an dem Ventilkörper 67, insbesondere am Kopf 78 befestigt.

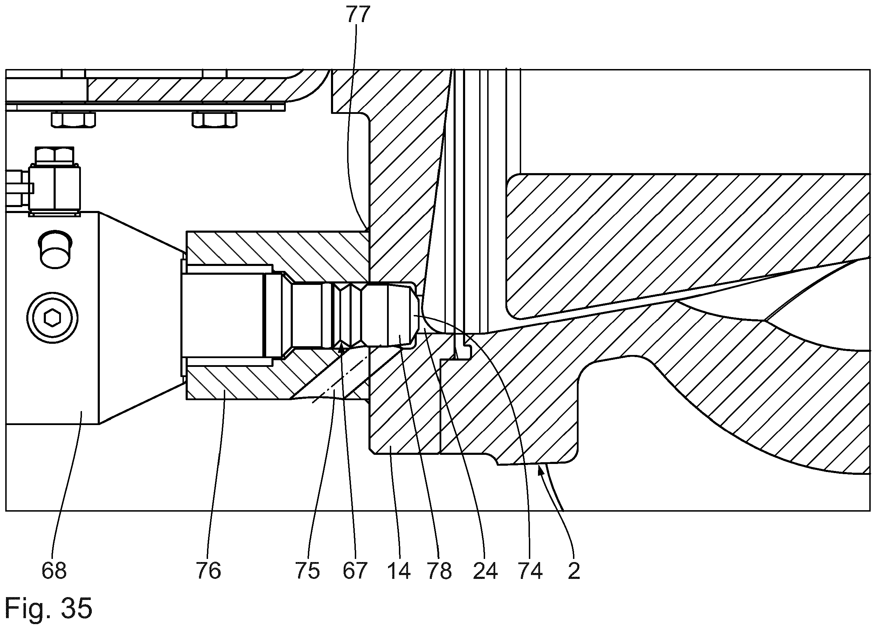

Nachfolgend wird anhand der Fig. 35 eine weitere Ausführungsform einer Weiche mit Ventilkörper erläutert. Bei der Ausführungsform gemäß Fig. 35 ist der Ventilkörper 67 mit einem Kopf 78 ausgeführt, der einen vorderen, dem Innenraum des Gehäuses 2 zugewandten Konusabschnitt 74 aufweist. Der Konusabschnitt 74 ermöglicht eine abdichtende Anordnung in der Ablauföffnung 24 im Gehäusedeckel 14 des Gehäuses 2. Im Bereich des Konusabschnitts 74 kann an dem Kopf 78 eine Ventilkörper-Dichtung 71 angeordnet sein.

Gemäß dem gezeigten Ausführungsbeispiel ist die Verlagerungsrichtung des Ventilkörpers 67 parallel zur Längsachse 7 der Weiche 1 orientiert. Unter einem Neigungswinkel ist eine Ablaufleitung 75 vorgesehen, die zum Ablaufen von Reinigungsflüssigkeit aus der Weiche 1 dient. An die Ablaufleitung 75 kann beispielsweise ein nicht dargestellter Ablaufbahn 25 angeschlossen werden. Die Ablaufleitung 75 ist aus der Ablauföffnung 24 in einer Richtung quer zur Verlagerungsrichtung des Ventilkörpers 67 abgezweigt. Um die, insbesondere abgedichtete Anbindung des Ventilkörpers 67 einerseits zu ermöglichen und andererseits die Ablaufleitung 75 zu integrieren, ist am Gehäusedeckel 14 ein Verbindungskörper 76 angebracht, insbesondere mittels einer umlaufenden Schweißnaht 77 angeschweißt. Der Verbindungskörper 76 gewährleistet die geführte und exakt positionierte Anordnung des Ventilkörpers 67 gegenüber dem Gehäusedeckel 14, also der Ablauföffnung 24. In den Verbindungskörper 76 ist zumindest abschnittsweise auch die Ablaufleitung 75 integriert. Der Verbindungskörper 76 dient auch zur Aufnahme und Halterung des Ventilkörper-Stellantriebs 68.

## Patentansprüche

1. Weiche für die Förderung von Fördergut umfassend
a. ein Gehäuse (2) mit mindestens drei Durchgangsöffnungen (3, 4, 5) zum Zuführen oder Abführen des Förderguts, wobei die Durchgangsöffnungen (3, 4, 5) eine Förderebene festlegen, wobei das Gehäuse (2) einen Gehäusegrundkörper (21) und einen mit dem Gehäusegrundkörper (21) lösbar verbundenen Gehäusedeckel (14) aufweist,
b. ein eine Drehachse (7) aufweisendes Drehteil (6; 34; 40; 56; 60; 61; 62) mit einer bezüglich der Drehachse (7) zumindest abschnittsweise konisch ausgeführten Außenkontur (9), wobei das Drehteil (6; 34; 40; 56; 60; 61; 62) mittels eines Drehantriebs (23) um die Drehachse (7) drehantreibbar angeordnet ist, wobei das Drehteil (6; 34; 40; 56; 60; 61; 62) im Gehäuse (2) in einer Förderstellung abgedichtet anordenbar ist, wobei das Drehteil (6; 34; 40; 56; 60; 61; 62) mittels eines Axialantriebs (15) entlang der Drehachse (7) axial zwischen der Förderstellung und einer zweiten Stellung angetrieben verlagerbar ist, wobei die Drehachse (7) senkrecht zur Förderebene orientiert ist,
c. ein im Drehteil (6; 34; 40; 56; 60; 61; 62) angeordneter Durchgangskanal (8), der in Abhängigkeit einer Drehposition des Drehteils (6; 34; 40; 56; 60; 61; 62) jeweils zwei Durchgangsöffnungen (3, 4, 5) zur Fördergutförderung entlang des Durchgangskanals (8) durch die Weiche (1; 53; 54) miteinander verbindet,
**dadurch gekennzeichnet, dass**
d. die zweite Stellung eine Reinigungsstellung ist, wobei durch mindestens eine der Durchgangsöffnungen (3, 4, 5) Reinigungsflüssigkeit in das Gehäuse (2) einleitbar ist,
e. eine Ablauföffnung (24, 55) im Gehäuse (2) angeordnet ist zum selbsttätigen Ablaufen der Reinigungsflüssigkeit aus dem Gehäuse (2), wobei die Ablauföffnung (24, 55) an dem Gehäusegrundkörper (21) und/oder an dem Gehäusedeckel (14) angeordnet ist,
f. zwischen dem Gehäusegrundkörper (21) und dem Gehäusedeckel (14) eine produktberührende Gehäusedeckel-Dichtung (27) angeordnet ist, die vom Innenraum des Gehäuses (2) für Fördergut und Reinigungsflüssigkeit frei zugänglich ist.
g. in der Reinigungsstellung zwischen dem Drehteil (6; 34; 40; 56; 60; 61; 62) und dem Gehäuse (2) ein Spülspalt gebildet ist, sodass in der Reinigungsstellung eine Fluidverbindung gebildet ist von der mindestens einen Durchgangsöffnung (3, 4, 5) über den Spülspalt zu der Ablauföffnung (24, 25).

2. Weiche gemäß Anspruch 1, **dadurch gekennzeichnet, dass** die Ablauföffnung (24, 55) stirnseitig, insbesondere an einer Stirnfläche (14; 20) außen liegend, am Gehäuse (2) angeordnet ist.

3. Weiche gemäß einem der vorstehenden Ansprüche, **dadurch gekennzeichnet, dass** die Innenfläche des Gehäusedeckels (14) und/oder des Gehäusegrundkörpers (21) zur Ablauföffnung (24, 55) hin zumindest bereichsweise geneigt ausgeführt ist.

4. Weiche gemäß einem der vorstehenden Ansprüche, **dadurch gekennzeichnet, dass** der Gehäusedeckel (14) bezüglich einer Drehposition gegenüber der Drehachse (7) veränderlich an dem Gehäusegrundkörper (21) anordenbar ist.

5. Weiche gemäß einem der vorstehenden Ansprüche, **dadurch gekennzeichnet, dass** ein Konuswinkel (κ) der Außenkontur (9) des Drehteils (6; 34; 40; 56; 60; 61; 62) zwischen 5° und 80°, insbesondere zwischen 10° und 40°, insbesondere zwischen 15° und 25° beträgt.

6. Weiche gemäß einem der vorstehenden Ansprüche, **gekennzeichnet durch** einen zwischen der Außenkontur (9) des Drehteils (6) und der Innenkontur (17) des Gehäuses (2) ausgebildeten Radialspalt (31) zum Abdichten des Drehteils (6) im Gehäuse (2), wobei der Radialspalt (31) insbesondere zwischen 0,01 mm und 0,5 mm, insbesondere zwischen 0,02 mm und 0,5 mm, insbesondere zwischen 0,05 mm und 0,3 mm und insbesondere zwischen 0,08 mm und 0,2 mm beträgt.

7. Weiche gemäß einem der Ansprüche 1 bis 5, **dadurch gekennzeichnet, dass** das Drehteil (40) mit seiner Außenkontur (9) an der Innenkontur (17) des Gehäuses (2) unmittelbar anliegt.

8. Weiche gemäß Anspruch 6 oder 7, **gekennzeichnet durch** Konus-Dichtungselemente (16) die bezüglich der Drehachse (7) umlaufend an dem Drehteil (6; 34; 40; 56; 60; 61; 62) angeordnet sind, wobei der Durchgangskanal (8) bezüglich der Drehachse (7) zwischen den Konus-Dichtungselementen (16) angeordnet ist.

9. Weiche gemäß einem der Ansprüche 1 bis 5, **gekennzeichnet durch** Durchgangskanal-Dichtungselemente (35), die bezüglich einer Durchgangskanal-Längsachse (36) umlaufend an dem Drehteil (34) angeordnet sind.

10. Weiche gemäß Anspruch 9, **dadurch gekennzeichnet, dass** die Durchgangskanal-Dichtungselemente (35; 65) jeweils in einer Dichtungsnut (37) des Drehteils (34), insbesondere spaltfrei an einer Oberfläche (38) des Drehteils (34) verpresst, gehalten sind, wobei insbesondere die Durchgangskanal-Dichtungselemente (35; 65) an der Außenkontur des Drehteils (34) mit einem Überstandsabschnitt vorstehen, wobei insbesondere das Durchgangskanal-Dichtungselement (35; 65) in der Dichtungsnut (37) formschlüssig gehalten ist.

11. Weiche gemäß Anspruch 10, **dadurch gekennzeichnet, dass** der Überstandsabschnitt mindestens eine, insbesondere umlaufende, Übergangsfase (39) für einen bündigen Übergang der Oberflächen des Drehteils (34) und des Durchgangskanal-Dichtungselements (35; 65) aufweist.

## Claims

1. Diverter valve for conveying a material to be conveyed comprising
a. a housing (2) with at least three passage openings (3, 4, 5) for feeding or discharging the material to be conveyed, wherein the passage openings (3, 4, 5) define a conveying level, wherein the housing (2) has a housing base body (21) and a housing cover (14) detachably connected to the housing base body (21),
b. a rotary part (6; 34; 40; 56; 60; 61; 62) having an axis of rotation (7) and an outer contour (9) which is designed to be conical, at least in sections, with respect to the axis of rotation (7), wherein the rotary part (6; 34; 40; 56; 60; 61; 62) is arranged such that it can be driven in rotation about the axis of rotation (7) by means of a rotary drive (23), wherein the rotary part (6; 34; 40; 56; 60; 61; 62) can be arranged in a sealed manner in a conveying position in the housing (2), wherein the rotary part (6; 34; 40; 56; 60; 61; 62) can be displaced axially between the conveying position and a second position in a driven manner along the axis of rotation (7) by means of an axial drive (15), wherein the axis of rotation (7) is oriented in a manner perpendicular to the conveying level,
c. a passage conduit (8) arranged in the rotary part (6; 34; 40; 56; 60; 61; 62), which, depending on a rotational position of the rotary part (6; 34; 40; 56; 60; 61; 62), interconnects in each case two passage openings (3, 4, 5) for conveying material to be conveyed along the passage conduit (8) through the diverter valve (1; 53; 54),
**characterized in that**
d. the second position is a cleaning position, wherein cleaning liquid can be introduced into the housing (2) through at least one of the passage openings (3, 4, 5),
e. a drain opening (24, 55) is arranged in the housing (2) for automatic drainage of the cleaning liquid from the housing (2), wherein the drain opening (24, 55) is arranged on the housing base body (21) and/or on the housing cover (14),
f. a housing cover seal (27) contacting the product is arranged between the housing base body (21) and the housing cover (14), which seal is freely accessible from the interior of the housing (2) for material to be conveyed and cleaning liquid,
g. in the cleaning position, a rinsing gap is formed between the rotary part (6; 34; 40; 56; 60; 61; 62) and the housing (2), so that in the cleaning position a fluid connection is formed from the at least one passage opening (3, 4, 5) via the rinsing gap to the drain opening (24, 25).

2. Diverter valve according to claim 1, **characterized in that** the drain opening (24, 55) is arranged on the front side, in particular on a base surface (14; 20) on the outside, of the housing (2).

3. Diverter valve according to one of the preceding claims, **characterized in that** the inner surface of the housing cover (14) and/or of the housing base body (21) is inclined at least in some regions towards the drain opening (24, 55).

4. Diverter valve according to one of the preceding claims, **characterized in that** the housing cover (14) can be variably arranged on the housing base body (21) with respect to a rotational position relative to the axis of rotation (7).

5. Diverter valve according to any one of the preceding claims, **characterized in that** a cone angle (κ) of the outer contour (9) of the rotary part (6; 34; 40; 56; 60; 61; 62) amounts to between 5° and 80°, in particular between 10° and 40°, in particular between 15° and 25°.

6. Diverter valve according to one of the preceding claims, **characterized by** a radial gap (31), formed between the outer contour (9) of the rotary part (6) and the inner contour (17) of the housing (2), for sealing the rotary part (6) in the housing (2), wherein the radial gap (31) amounts to in particular between 0.01 mm and 0.5 mm, in particular between 0.02 mm and 0.5 mm, in particular between 0.05 mm and 0.3 mm and in particular between 0.08 mm and 0.2 mm.

7. Diverter valve according to one of the claims 1 to 5, **characterized in that** the rotary part (40), with its outer contour (9), directly rests on the inner contour (17) of the housing (2).

8. Diverter valve according to claim 6 or 7, **characterized by** cone sealing elements (16) which are arranged on the rotary part (6; 34; 40; 56; 60; 61; 62) in a circumferential manner with respect to the axis of rotation (7), wherein the passage conduit (8) is arranged between the cone sealing elements (16) with respect to the axis of rotation (7).

9. Diverter valve according to any one of claims 1 to 5, **characterized by** passage conduit sealing elements (35) that are arranged with respect to a passage conduit longitudinal axis (36) circumferentially on the rotary part (34).

10. Diverter valve according to claim 9, **characterized in that** each of the passage conduit sealing elements (35; 65) is held in a sealing groove (37) of the rotary part (34), in particular pressed without a gap on a surface (38) of the rotary part (34), wherein, in particular, the passage conduit sealing elements (35; 65) project on the outer contour of the rotary part (34) with a projection section, wherein, in particular, the passage conduit sealing element (35; 65) is held in a form-fitting manner in the sealing groove (37).

11. Diverter valve according to claim 10, **characterized in that** the projection section has at least one, in particular circumferential, transition chamfer (39) for a flush transition of the surfaces of the rotary part (34) and the passage conduit sealing element (35; 65).

## Revendications

1. Aiguillage destiné au transport de marchandises à transporter comprenant
a. un boîtier (2) avec au moins trois ouvertures de passage (3, 4, 5) pour l'amenée ou l'évacuation de marchandises à transporter, les ouvertures de passage (3, 4, 5) définissant un plan de transport, le boîtier (2) présentant un corps de base de boîtier (21) et un couvercle de boîtier (14) relié de manière amovible au corps de base de boîtier (21),
b. une pièce rotative (6 ; 34 ; 40 ; 56 ; 60 ; 61 ; 62) présentant un axe de rotation (7) avec un contour extérieur (9) réalisé de manière conique au moins par sections par rapport à l'axe de rotation (7), la pièce rotative (6 ; 34 ; 40 ; 56 ; 60 ; 61 ; 62) étant disposée de manière à pouvoir être entraînée en rotation autour de l'axe de rotation (7) au moyen d'un entraînement en rotation (23), la pièce rotative (6 ; 34 ; 40 ; 56 ; 61 ; 62) pouvant être disposée de manière étanche dans le boîtier (2) dans une position de transport, la pièce rotative (6 ; 34 ; 40 ; 56 ; 60 ; 61 ; 62) pouvant être déplacée axialement au moyen d'un entraînement axial (15) le long de l'axe de rotation (7) entre la position de transport et une deuxième position, l'axe de rotation (7) étant orienté perpendiculairement au plan de transport,
c. un canal de passage (8) disposé dans la pièce rotative (6 ; 34 ; 40 ; 56 ; 60 ; 61 ; 62) qui, en fonction d'une position de rotation de la pièce rotative (6 ; 34 ; 40 ; 56 ; 60 ; 61 ; 62), relie chaque fois entre elles deux ouvertures de passage (3, 4, 5) pour le transport de la marchandise à transporter le long du canal de passage (8) à travers l'aiguillage (1 ; 53 ; 54),
**caractérisé en ce que**
d. la deuxième position est une position de nettoyage, du liquide de nettoyage pouvant être introduit dans le boîtier (2) par au moins une des ouvertures de passage (3, 4, 5),
e. une ouverture d'écoulement (24, 55) est disposée dans le boîtier (2) pour l'écoulement automatique du liquide de nettoyage hors du boîtier (2), l'ouverture d'écoulement (24, 55) étant disposée sur le corps de base du boîtier (21) et/ou sur le couvercle du boîtier (14),
f. entre le corps de base de boîtier (21) et le couvercle de boîtier (14) est disposé un joint de couvercle de boîtier (27) en contact avec le produit, qui est librement accessible depuis l'intérieur du boîtier (2) pour la marchandise à transporter et le liquide de nettoyage,
g. dans la position de nettoyage, une fente de rinçage est formée entre la pièce rotative (6 ; 34 ; 40 ; 56 ; 60 ; 61 ; 62) et le boîtier (2), de sorte que dans la position de nettoyage, une liaison de fluide est formée depuis l'au moins une ouverture de passage (3, 4, 5) via la fente de rinçage vers l'ouverture d'écoulement (24, 25).

2. Aiguillage selon la revendication 1, **caractérisé en ce que** l'ouverture d'écoulement (24, 55) est disposée sur le côté frontal du boîtier (2), en particulier à l'extérieur sur une surface frontale (14 ; 20).

3. Aiguillage selon l'une quelconque des revendications précédentes, **caractérisé en ce que** la surface intérieure du couvercle de boîtier (14) et/ou du corps de base de boîtier (21) est réalisée de manière inclinée au moins par zones vers l'ouverture d'écoulement (24, 55).

4. Aiguillage selon l'une quelconque des revendications précédentes, **caractérisé en ce que** le couvercle de boîtier (14) peut être disposé sur le corps de base de boîtier (21) de manière variable par rapport à une position de rotation par rapport à l'axe de rotation (7).

5. Aiguillage selon l'une quelconque des revendications précédentes, **caractérisé en ce qu'**un angle de cône (κ) du contour extérieur (9) de la pièce rotative (6 ; 34 ; 40 ; 56 ; 60 ; 61 ; 62) est compris entre 5° et 80°, en particulier entre 10° et 40°, en particulier entre 15° et 25°.

6. Aiguillage selon l'une quelconque des revendications précédentes, **caractérisé par** une fente radiale (31) formée entre le contour extérieur (9) de la pièce rotative (6) et le contour intérieur (17) du boîtier (2) pour assurer l'étanchéité de la pièce rotative (6) dans le boîtier (2), la fente radiale (31) étant en particulier comprise entre 0,01 mm et 0,5 mm, en particulier entre 0,02 mm et 0,5 mm, en particulier entre 0,05 mm et 0,3 mm et en particulier entre 0,08 mm et 0,2 mm.

7. Aiguillage selon l'une quelconque des revendications 1 à 5, **caractérisé en ce que** la pièce rotative (40) s'applique directement par son contour extérieur (9) contre le contour intérieur (17) du boîtier (2).

8. Aiguillage selon la revendication 6 ou 7, **caractérisé par** des éléments d'étanchéité coniques (16) qui sont disposés sur la pièce rotative (6 ; 34 ; 40 ; 56 ; 60 ; 61 ; 62) de manière à faire le tour par rapport à l'axe de rotation (7), le canal de passage (8) étant disposé entre les éléments d'étanchéité coniques (16) par rapport à l'axe de rotation (7).

9. Aiguillage selon l'une quelconque des revendications 1 à 5, **caractérisé par** des éléments d'étanchéité de canal de passage (35) disposés sur la pièce rotative (34) de manière circonférentielle par rapport à un axe longitudinal de canal de passage (36).

10. Aiguillage selon la revendication 9, **caractérisé en ce que** les éléments d'étanchéité de canal de passage (35 ; 65) sont maintenus chacun dans une rainure d'étanchéité (37) de la pièce rotative (34), en particulier pressés sans fente sur une surface (38) de la pièce rotative (34), les éléments d'étanchéité de canal de passage (35 ; 65) dépassant en particulier sur le contour extérieur de la pièce rotative (34) avec une section en saillie, l'élément d'étanchéité de canal de passage (35 ; 65) étant en particulier maintenu par complémentarité de forme dans la rainure d'étanchéité (37).

11. Aiguillage selon la revendication 10, **caractérisé en ce que** la section en saillie présente au moins un chanfrein de transition (39), en particulier périphérique, pour une transition affleurante des surfaces de la pièce rotative (34) et de l'élément d'étanchéité du canal de passage (35 ; 65).
